(19) Europäisches Patentamt
European Patent Office
Office européen des brevets

(11) **EP 2 767 862 B1**

(12) **EUROPÄISCHE PATENTSCHRIFT**

(45) Veröffentlichungstag und Bekanntmachung des Hinweises auf die Patenterteilung:
**27.09.2017 Patentblatt 2017/39**

(51) Int Cl.:
*G02C 7/02* (2006.01)     *G02C 7/06* (2006.01)

(21) Anmeldenummer: **14001194.1**

(22) Anmeldetag: **13.10.2011**

(54) **VERORDNUNGS- UND INDIVIDUALISIERUNGSABHÄNGIGE ANPASSUNG DER OBJEKTABSTANDSFUNKTION AN VERÄNDERTE OBJEKTABSTÄNDE FÜR DIE NÄHE UND/ODER FERNE**

PRESCRIPTION-DEPENDENT AND INDIVIDUALIZATION-DEPENDENT ADAPTATION OF THE OBJECT DISTANCE FUNCTION TO CHANGED OBJECT DISTANCES FOR NEAR AND/OR FAR VISION

ADAPTATION DÉPENDANT D'UNE PRESCRIPTION ET D'UNE INDIVIDUALISATION DE LA FONCTION DE DISTANCE À UN OBJET À DES DISTANCES À L'OBJET MODIFIÉES POUR LA VISION DE PRÈS ET/OU DE LOIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2010 DE 102010049168**

(43) Veröffentlichungstag der Anmeldung:
**20.08.2014 Patentblatt 2014/34**

(62) Dokumentnummer(n) der früheren Anmeldung(en) nach Art. 76 EPÜ:
**11776091.8 / 2 630 544**

(73) Patentinhaber: **Rodenstock GmbH**
**80687 München (DE)**

(72) Erfinder:
• **Altheimer, Helmut**
**87650 Baisweil-Lauchdorf (DE)**
• **Kaster, Robert**
**41749 Viersen (DE)**
• **Zimmermann, Martin**
**85253 Erdweg-Kleinberghofen (DE)**
• **Becken, Wolfgang**
**82061 Neuried (DE)**
• **Esser, Gregor**
**80686 München (DE)**
• **Uttenweiler, Dietmar**
**82057 Icking (DE)**
• **Welk, Andrea**
**81547 München (DE)**

(74) Vertreter: **Müller-Boré & Partner Patentanwälte PartG mbB Friedenheimer Brücke 21 80639 München (DE)**

(56) Entgegenhaltungen:
**WO-A1-2008/089996**

EP 2 767 862 B1

**Beschreibung**

Aspekte der vorliegenden Erfindung betreffen computerimplementierte Verfahren zum Optimieren und Herstellen eines progressiven Brillenglases, entsprechende Vorrichtungen zum Optimieren und zum Herstellen eines progressiven Brillenglases, entsprechende Computerprogrammerzeugnisse und Speichermedien.

Eine Optimierung eines progressiven Brillenglases erfolgt in der Regel durch Minimierung einer Zielfunktion, in welcher Ziel- bzw. Sollwerte für zumindest eine optische Größe, z.B. Astigmatismus und/oder Brechkraft, oder Ziel- bzw. Sollwerte für zumindest einen Abbildungsfehler, z.B. astigmatischer Fehler und/oder Refraktionsfehler, des progressiven Brillenglases eingehen. Bei der Optimierung des Brillenglases können die individuellen Verordnungswerte (sph, Zyl, Achse, Add, Prisma, Basis), Parameter der individuellen Lage bzw. Anordnung des Brillenglases vor dem Auge des Brillenträgers (z.B. Hornhautscheitelabstand (HSA), Fassungsscheibenwinkel (FSW), Vorneigung bzw. pantoskopischer Winkel), physiologische Parameter (z.B. Pupillendistanz) berücksichtigt werden. Das progressive Brillenglas kann "online" nach Bestelleingang als Unikat optimiert und berechnet werden.

In DE 10 2008 015 189, DE 10 2009 005 206 oder DE 10 2009 005 214 ist ferner vorgeschlagen worden, die Sollastigmatismusverteilung, auf Basis derer das progressive Brillenglas optimiert wird, mittels einer Transformation eines bestehenden bzw. vorgegebenen Designs (Startdesign, Basisdesign) zu ermitteln. So wird in DE 10 2008 015 189 vorgeschlagen, Sollastigmatismusverteilungen für unterschiedliche Additionen mittels einer Transformation einer vorgegebenen Basis- oder Start-Sollastigmatismusverteilung, welche für eine vorgegebene Basisaddition festgelegt worden ist, zu berechnen. In DE 10 2009 005 206 oder DE 10 2009 005 214 wird vorgeschlagen, mittels einer Manipulation einer vorgegebenen Basis-Sollisoastigmatismuslinie, Sollastigmatismusverteilungen mit unterschiedlichen Breiten des Fern- und/oder des Nahbereichs aus einer vorgegebenen Sollastigmatismusverteilung zu erzeugen. Die in DE 10 2008 015 189, DE 10 2009 005 206 oder DE 10 2009 005 214 beschriebenen Verfahren ermöglichen es, das Verfahren zum Optimieren eines progressiven Brillenglases zu vereinfachen und effizienter und flexibler zu gestalten. Die WO 2008/089996 offenbart ein computerimplementiertes Verfahren zum Berechnen eines Brillenglasdesigns für ein individuelles progressives Brillenglas mit einer variabel einstellbaren, individuellen vertikalen Position des Fern- und/oder des Nahbezugspunkts. Es ist eine Aufgabe der Erfindung, verbesserte Verfahren zum Optimieren und Herstellen von progressiven Brillengläsern bereitzustellen.

Diese Aufgabe wird durch ein computerimplementiertes Verfahren zum Optimieren eines progressiven Brillenglases mit den Merkmalen des Anspruchs 1, ein Computerprogrammerzeugnis mit den Merkmalen des Anspruchs7, ein Speichermedium mit darauf gespeichertem Computerprogramm mit den Merkmalen des Anspruchs 8, eine Vorrichtung zum Optimieren eines progressiven Brillenglases mit dem Merkmalen des Anspruchs 9, ein Verfahren zum Herstellen eines progressiven Brillenglases mit dem Merkmalen des Anspruchs 10 und eine Vorrichtung zum Herstellen eines progressiven Brillenglases mit dem Merkmalen des Anspruchs 11 gelöst.

Wie bereits oben ausgeführt erfolgt die Optimierung von progressiven Brillengläsern in der Regel durch Minimierung einer Zielfunktion, in welcher Ziel- bzw. Sollwerte für zumindest eine optische Größe (z.B. Astigmatismus und/oder Brechkraft) oder Ziel- bzw. Sollwerte für zumindest einen Abbildungsfehler (z.B. astigmatischer Fehler bzw. astigmatische Abweichung und/oder Refraktionsfehler) des progressiven Brillenglases eingehen. Die in die Zielfunktion eingehenden Ziel- bzw. Sollwerte der zumindest einen optischen Eigenschaft oder des zumindest einen Abbildungsfehlers charakterisieren das Design eines Brillenglases. Darüber hinaus kann das Brillenglasdesign ein geeignetes Objektabstandsmodell umfassen. Das Objektabstandsmodell kann beispielsweise eine Objektabstandsfunktion, welche als der reziproke Objektabstand entlang der Hauptblicklinie definiert ist, umfassen. Ein standardisiertes Objektabstandsmodel ist z.B. in DIN 58 208 Teil 2 (vgl. Bild 6) angegeben. Das Objektabstandsmodel kann jedoch von diesem standardisierten Objektabstandsmodel abweichen.

Unter einer Hauptblicklinie wird die Folge der Durchstoßpunkte der Hauptstrahlen durch die jeweilige Brillenglasfläche beim Blick auf eine Linie verstanden, welche in der senkrechten Ebene liegt, welche den Abstand der beiden Augendrehpunkte halbiert (sog. Zyklopenaugenebene). Bei der Brillenglasfläche kann es sich um die objekt- oder die augenseitige Fläche handeln. Die Lage der Linie in der Zyklopenaugenebene wird durch das gewählte Objektabstandmodell bestimmt.

Unter einer Hauptlinie wird eine im Wesentlichen gerade oder gewunden verlaufende Linie verstanden, entlang welcher die gewünschte Zunahme des Brechwerts des Brillenglases vom Fern- zum Nahteil erreicht wird. Die Hauptlinie verläuft im Wesentlichen mittig zu dem Brillenglas von oben nach unten, d.h. entlang einer im Wesentlichen vertikalen Richtung. Die Hauptlinie stellt somit eine Konstruktionslinie im Koordinatensystem der zu optimierenden objektseitigen oder augenseitigen Fläche zur Beschreibung der Sollwerte dar. Der Verlauf der Hauptlinie des Brillenglases wird so gewählt, dass sie zumindest in etwa der Hauptblicklinie folgt. Ein Verfahren zum Anpassen der Hauptlinie an die Hauptblicklinie wird z.B. in EP 1 277 079 A2 beschrieben.

Die Objektabstandsfunktion (d.h. der reziproke Objektabstand an der Hauptblicklinie) spielt eine wesentliche Rolle bei der Designfestlegung und Optimierung von progressiven Brillengläsern. So wird nach dem Satz von Minkwitz bei weitestgehender Vollkorrektion die Grundcharakteristik eines progressiven Brillenglases in der Umgebung der Hauptblicklinie vorwiegend durch den Verlauf der Objektabstandsfunktion $A_1(y)$ entlang der Hauptblicklinie bestimmt.

Eine Aufgabe der Erfindung ist es daher, ein effizientes und schnelles Verfahren zu einer automatischen Anpassung der Objektabstandsfunktion an veränderte Objektabstände oder an ein verändertes Objektabstandsmodell bereitzustellen.

Gemäß einem ersten Aspekt der Erfindung wird ein computerimplementiertes Verfahren zum Optimieren eines progressiven Brillenglases vorgeschlagen, wobei das Verfahren die Schritte:

Vorgeben einer Start-Objektabstandsfunktion $A_{1G}(y)$,

Erfassen von Objektentfernungsdaten, wobei die Objektentfernungsdaten eine Objektentfernung in zumindest einem vorgegebenen Punkt auf der Hauptblicklinie umfassen;
Abändern oder Transformieren der Start-Objektabstandsfunktion in Abhängigkeit von den erfassten Objektentfernungsdaten; und
Optimieren des progressiven Brillenglases, wobei bei der Optimierung des Brillenglases die abgeänderte/transformierte Objektabstandsfunktion berücksichtigt wird,
umfasst.

Das Abändern/Transformieren der Start-Objektabstandsfunktion $A_{1G}(y)$ umfasst ein Überlagern der Start-Objektabstandsfunktion $A_{1G}(y)$ mit einer Korrekturfunktion $A_{1Korr}(y)$:

$$A_1(y) = A_{1G}(y) + A_{1Korr}(y). \qquad (1)$$

Die Objektabstandsfunktion gibt den reziproken Objektabstand (die reziproke Objektentfernung) entlang der Hauptblicklinie als Funktion der vertikalen Koordinate $y$ wieder. Anders ausgedrückt ist die Objektabstandsfunktion als der reziproke Objektabstand (die reziproke Objektentfernung) entlang der Hauptblicklinie definiert.

Die Korrekturfunktion weist zumindest einen variablen Parameter auf, welcher derart in Abhängigkeit von den erfassten Objektentfernungsdaten bestimmt wird, dass der Wert der abgeänderten Start-Objektabstandsfunktion in zumindest einem vorgegebenen Punkt gleich dem reziproken Wert der erfassten Sollobjektentfernung für diesen Punkt ist. Mit anderen Worten wird der zumindest eine variable Parameter (Koeffizient) der Korrekturfunktion derart in Abhängigkeit von den erfassten Objektabstandsdaten bestimmt oder festgelegt, dass die Bedingung:

$$A_1(y = y_D) = A_{1D}, \qquad (2)$$

erfüllt wird, wobei in der obigen Formel:

$A_{1D}$ den reziproken Wert der erfassten Sollobjektentfernung bzw. des erfassten Sollobjektabstands in dem zumindest einen vorgegebenen Punkt D auf der Hauptblicklinie, wobei der Punkt $D$ eine vertikale Koordinate $y_D$ aufweist; und
$A_1(y=y_D)$ den Wert der Objektabstandsfunktion $A_1(y)$ im vorgegebenen Punkt D auf der Hauptblicklinie bezeichnen.

Dabei kann das Koordinatensystem ein beliebiges Koordinatensystem sein, insbesondere eines der zuvor beschriebenen Koordinatensysteme $\{x,y\}$ oder $\{u, y\}$, wobei $u$ den Abstand von der Hauptblicklinie oder Hauptlinie darstellt. In einem Koordinatensystem $\{x, y\}$ gilt für die Punkte auf der Hauptblicklinie ($x = x_{HBL} = x_0$, $y$). In einem Koordinatensystem $\{u, y\}$ der Hauptblicklinie gilt für die Punkte auf der Hauptblicklinie ($u = 0$, $y$).

Vorzugsweise umfassen die Objektentfernungsdaten zumindest eine Sollobjektentfernung $A_{1Ferne}$ in einem vorgegeben Fernbezugspunkt (Designpunkt Ferne) $DF$ auf der Hauptblicklinie und eine Sollobjektentfernung $A_{1Nähe}$ in einem vorgegebenen Nahbezugspunkt (Designpunkt Nähe) $DN$ auf der Hauptblicklinie. Der zumindest eine variable Parameter der Korrekturfunktion wird derart bestimmt oder festgelegt, dass der jeweilige Wert der abgeänderten Start-Objektabstandsfunktion im Fern- und/oder Nahbezugspunkt gleich dem entsprechenden reziproken Wert der erfassten Sollobjektentfernung für den Fern- und/oder Nahbezugspunkt ist.

Anders ausgedrückt umfassen in diesem Fall die Objektentfernungsdaten eine Sollobjektentfernung für den Fernbezugspunkt $DF$ und eine Sollobjektentfernung für den Nahbezugspunkt $DN$. Der Fernbezugspunkt befindet sich auf der Hauptblicklinie auf einer vertikalen Höhe $y_{DF}$. Der Nahbezugspunkt befindet sich auf der Hauptblicklinie auf einer vertikalen Höhe $y_{DN}$. Der zumindest eine variable Parameter der Korrekturfunktion wird derart festgelegt, dass die Bedingungen:

$$A_1(y = y_{DF}) = A_{1Ferne} ,$$

$$A_1(y = y_{DN}) = A_{1Nähe} \tag{3}$$

erfüllt sind, wobei

$A_{1Ferne}$ den reziproken Wert der Sollobjektentfernung im Fernbezugspunkt $DF$, und
$A_{1Nähe}$ den reziproken Wert der Sollobjektentfernung im Nahbezugspunkt $DN,$ bezeichnen.

Die Start-Objektabstandsfunktion, nachfolgend auch Grund-Objektabstandsfunktion oder Grundfunktion genannt, $A_{1G}(y)=A_{1G}(x=x_0,y)=A_{1G}(u-0,y)$ kann eine beliebige analytische Funktion oder auch eine Interpolationsfunktion (z.B. Splinefunktion) sein. Ebenfalls kann $A_{1G}(y)$ punktweise vorgegeben werden.

Die Start-Objektabstandsfunktion kann beispielsweise analytisch mittels einer Doppelasymptotenfunktion der Form:

$$A_{1G}(y) = DAS_G(y) = b_G + \frac{a_G}{(1 + e^{c(y+d)})^m} \tag{4}$$

mit den Parametern/Variablen $a_G, b_G, c, d, m$ beschrieben werden.

Eine Doppelasymptotenfunktion weist insbesondere folgende vorteilhafte Eigenschaften auf:

- Die beiden Asymptoten nehmen jeweils entsprechend die Werte $b_G$ und $(b_G+a_G)$ an;
- Mit dem variablen Parameter $d$ kann die vertikale Position gesteuert werden. Vorzugsweise liegt der Parameter $d$ im Bereich $-10 < d < 10$, weiter bevorzugt im Bereich $-8 < d < 5$;
- Je größer der Betrag des variablen Parameters $c$ desto schneller erfolgt der Übergang von einer zur anderen Asymptote. Der Parameter c wird vorzugsweise derart ausgewählt, dass $|c| < 1,5$;
- Der *Parameter m* ($m > 0$) beschreibt die Asymmetrie der Funktion. Bei $m=1$ weist die Doppelasymptotenfunktion eine Punktsymmetrie mit Zentrum $y=-d$ auf. Vorzugsweise liegt der Parameter $m$ im Bereich $0,2 < m < 2$, weiter bevorzugt im Bereich $0,4 < m < 1$;
- Wird für den variablen Parameter c das negative Vorzeichen ($c < 0$) gewählt, so gilt:

  - Nahteilasymptote $A_{1G}(y\to-\infty)=A_{1GNähe}=b_G$; und
  - Fernteilasymptote $A_{1G}(y\to+\infty)=A_{1Ferne}=(b_G+a_G)$.

In der Regel wird die Start-Objektabstandsfunktion $A_{1G}(y)$, welche dem Startdesign (Grunddesign) zugeordnet ist, derart vorgegeben, dass die Objektentfernungen im Fernbezugspunkt $DF$ und im Nahbezugspunkt $DN$ (Designpunkten Ferne und Nähe) in etwa den Standardobjektentfernungen $A_{1GFerne}$ und $A_{1GNähe}$, d.h. die Sollobjektentfernungen in dem Fern- und dem Nahbezugspunkt gemäß einem Standard-Objektabstandsmodell, entsprechen. Die Parameter $a_G, b_G$ können folglich anhand den Standardvorgaben für die reziproken Objektabstände $A_{1GFerne}$ und $A_{1GNähe}$ in den Fern- und Nahbezugspunkte $DF$ und $DN$ automatisch ermittelt werden. Ein Standard-Objektabstandsmodell ist z.B. in DIN 58 208 Teil 2 angegeben.

Wählt ein Brillenträger in dem Fern- und/oder Nahbezugspunkt abweichende Objektentfernungen $A_{1Ferne}$ und $A_{1Nähe}$ wird die Start-Objektabstandsfunktion mit einer Korrekturfunktion überlagert, um dieser Veränderung Rechnung zu tragen.

Die Korrekturfunktion $A_{1Korr}(y)$ ist.

- eine Doppelasymptotenfunktion der Form $$A_{Korr}(y) = DAS_{Korr}(y) = b_{korr} + \frac{a_{korr}}{(1 + e^{c_{korr}(y+d_{korr})})^{m_{korr}}}$$ mit den Parametern (Koeffizienten) $a_{korr}, b_{korr}, c_{korr}, d_{korr}, m_{korr}$;
- eine lineare Funktion der Start-Objektabstandsfunktion $A_{1Korr}(y)=c+mA_{1G}(y)$ mit den Parametern (Koeffizienten) $c$ und $m$.

Zusätzlich kann die Start-Objektabstandsfunktion mit anderen Funktionen überlagert werden, um z.B. eine gezielte Abänderung der Designcharakteristik zu erzielen. So kann die Start-Objektabstandsfunktion mit einer Funktion in Form einer Gauss'schen Glockenkurve $A_{1Korr}(y) = A_{1Gauss}(y) = g(y) = g_a + g_b e^{-\frac{y-y_0}{\sigma}}$ mit den Parametern (Koeffizienten) $g_a, g_b, y_0, \sigma$ überlagert werden.

Zumindest einer der Parameter der Korrekturfunktion ist variabel und wird in Abhängigkeit von den erfassten Objektabstandsdaten, insbesondere von den geänderten Sollwerten für die Objektabstände im Fern- und/oder im Nahbezugspunkt bestimmt bzw. festgelegt.

Vorzugsweise ist die Korrekturfunktion eine Doppelasymptotenfunktion der Form

$$A_{Korr}(y) = DAS_{Korr}(y) = b_{korr} + \frac{a_{korr}}{(1 + e^{c_{korr}(y+d_{korr})})^{m_{korr}}} \tag{5}$$

mit den Parametern (Koeffizienten) $a_{korr}, b_{korr}, c_{korr}, d_{korr}, m_{korr}$

In diesem Fall gilt:

$$A_1(y) = A_{1G}(y) + DAS_{korr}(y). \tag{6}$$

Die variablen Parameter/Koeffizienten $b_{korr}$ und $a_{korr}$ der Korrekturfunktion werden in Abhängigkeit von den erfassten Objektentfernungsdaten bestimmt bzw. festgelegt.

Vorzugsweise sind sowohl die Start-Objektabstandsfunktion als auch die Korrekturfunktion Doppelasymptotenfunktionen. Vorzugsweise weist die Korrekturfunktion die gleichen Parameter $c$, $d$ und $m$ auf, wie die Parameter der Start-Objektabstandsfunktion (d.h. $c = c_{korr}, d = d_{korr}, m = m_{korr}$). In diesem Fall gilt:

$$A_1(y) = A_{1G}(y) + DAS_{Korr}(y) = \left( b_G + \frac{a_G}{(1 + e^{c(y+d)})^m} \right) + \left( b_{kor} + \frac{a_{korr}}{(1 + e^{c(y+d)})^m} \right) =$$

$$(b_G + b_{korr}) + \frac{(a_G + a_{korr})}{(1 + e^{c(y+d)})^m}. \tag{7}$$

Somit kann sichergestellt werden, dass die Charakteristik der Start-Objektabstandsfunktion bei einer Anpassung an geänderte Objektabstände im Wesentlichen beibehalten wird.

Mit den beiden Bedingungen $A_1(y_{DF}) = A_{1Ferne}$ und $A_1(y_{DN}) = A_{1Nähe}$ sind die beiden Koeffizienten $b = (b_G + b_{korr})$ und $a = (a_G + a_{korr})$ und folglich auch die Koeffizienten $b_{korr} = (b - b_G)$ und $a_{korr} = (a - a_G)$ der Korrekturfunktion eindeutig bestimmt.

Die Koeffizienten/Parameter der Start-Objektabstandsfunktion (Grundfunktion) und die Koeffizienten/Parameter der Korrekturfunktion können vorab bestimmt werden und vorzugsweise getrennt in einem Speicher als Datenfiles gespeichert werden. Dies ermöglicht eine einfache nachträgliche Reproduktion und Änderung der Werte des Startdesigns.

Wie bereits oben ausgeführt, kann die Start-Objektabstandsfunktion, welche insbesondere eine Doppelasymptotenfunktion sein kann, zusätzlich zu einer Überlagerung mit einer Korrekturfunktion $A_{1Korr}(y)$ - mit einer Funktion in Form einer Gauss'schen Glockenkurve $A_{1Gauss}(y) = g(y) = g_a + g_b e^{-\frac{y-y_0}{\sigma}}$ mit den Parametern/Koeffizienten $g_a, g_b, y_0, \sigma$ überlagert werden:

$$A_1(y) = A_{1G}(y) + A_{1Gauss}(y) = A_{1G}(y) + \left(g_a + g_b e^{-\frac{y-y_0}{\sigma}}\right) \tag{8}$$

In dem Fall, dass die Start-Objektabstandsfunktion eine Doppelasymptotenfunktion ist, gilt:

$$A_1(y) = A_{1G}(y) + A_{1Gauss}(y) = \left(b\frac{a}{(1+e^{c(y+d)})^m}\right) + \left(g_a + g_b e^{-\frac{y-y_0}{\sigma}}\right) \tag{9}$$

Durch die Überlagerung der Start-Objektabstandsfunktion (Grundfunktion) mit einer Gauss'schen Glockenkurve (Gauss'schen Funktion) kann die Kurvencharakteristik der Start-Objektabstandsfunktion gezielt abgeändert werden. Insbesondere bewirkt die Gauss'sche Funktion, dass die Objektabstandsfunktion oberhalb des Gaussmaximums flacher verläuft. Die Brechwertänderung wird in diesem Bereich geringer, die Isoastigmatismuslinien rücken weiter nach außen und der im Wesentlichen fehlerfreie Glasbereich, z.B. der Glasbereich mit einem astigmatischen Fehler kleiner als 0,5 dpt, wird breiter. Somit können Bereiche (z.B. der Zwischenbereich) gezielt höher oder niedriger gewichtet werden.

So kann zum Beispiel aus einem gleichmäßigen, langsamen Übergang vom Fernteilwert der Objektentfernung $A_{1GFerne}$ zum Nahteilwert der Objektentfernung $A_{1GNähe}$ ($g_b \approx 0$) ein anderer Verlauf der Objektabstandsfunktion $A_1(u=0,y)=A_1(y)$ ($A_1$-Verlauf) für ein Bildschirmarbeitsplatzglas ($g_b{\neq}0$, $\sigma{\neq}0$) erzeugt werden.

In einem Beispiel kann anhand einer prozentualen Gewichtung $g_G$ der Gauss'schen Funktion, wobei $g_G \in$ [0,100]%, nach Vorgabe eines maximalen $A_1$-Zuwachses der Gauss'schen Funktion $g_{bmax}$ (eine designspezifische Vorgabe) der zugehörige Koeffizient $g_b$ der Gauss'schen Funktion ermittelt werden:

$$g_b = \frac{g_G}{100} g_{b\max} \tag{10}$$

Bei einer 90% Gewichtung der Gauss'schen Funktion und einem maximalen $A_1$-Zuwachs der Gauss'schen Funktion $g_{bmax} = 0,6$ dpt ergibt sich für $g_b$ z.B. einen Wert von 0,54 dpt.

Die prozentuale Gewichtung $g_G$ sowie die weiteren Koeffizienten der Gauss'schen Funktion können für das jeweilige Grunddesign vorgegeben werden oder z.B. anhand des in WO 2010/084019 beschriebenen Verfahrens anhand eines Designvielecks ermittelt werden. Vorzugsweise liegt der Parameter $g_a$ im Bereich $- 1 < g_a < 1$, weiter bevorzugt ist $g_a = 0$. Der Parameter $y_0$ liegt vorzugsweise im Bereich $-10 < y_0 < 5$, weiter bevorzugt im Bereich $-5 < y_0 < 0$. Der Parameter $\sigma$ liegt vorzugsweise im Bereich $0 < \sigma < 15$, ferner bevorzugt im Bereich $5 < \sigma < 10$.

Die Überlagerung der Start-Objektabstandsfunktion mit einer Gauss'schen Glockenkurve kann gemäß einem weiteren Aspekt unabhängig von einer Überlagerung mit einer Korrekturfunktion erfolgen.

Gemäß einem weiteren Beispiel ist die Korrekturfunktion $A_{Korr}(y)$ eine lineare Funktion der Start-Objektabstandsfunktion:

$$A_{Korr}(y) = c + m A_{1G}(y) \tag{11}$$

mit den Parametern/Koeffizienten $c$ und $m$.

Die abgeänderte Objektabstandsfunktion stellt somit ebenfalls eine lineare Funktion der Start-Objektabstandsfunktion $A_{1G}(u=0,y)=A_{1G}(y)$ dar:

$$A_1(y) = A_{1G}(y) + c + m A_{1G}(y) = c + (1 + m) A_{1G}(y) \tag{12}$$

oder in einer abgekürzten Schreibenweise

$$A_1 = A_{1G} + c + mA_{1G} = c + (1 + m)A_{1G}.$$ (13)

Vorzugsweise werden die Geradenkoeffizienten c und *m* aus den Abweichungen der Werte der Start-Objektabstandsfunktion $A_{1G}(y)$ von den erfassten Sollwerten der reziproken Objektentfernung in dem Fern- und Nahbezugspunkt berechnet. Anders ausgedrückt erfolgt eine lineare Anpassung der Start-Objektabstandsfunktion an die geänderten Objektabstände im Fern- und/oder im Nahbezugspunkt.

Vorzugsweise gilt In diesem Fall gilt für den Koeffizienten *c* und *m*:

$$c = \frac{\Delta A_{1F} A_{1G}(y_{DN}) - \Delta A_{1N} A_{1G}(y_{DF})}{A_{1G}(y_{DN}) - A_{1G}(y_{DF})}$$

$$m = \frac{\Delta A_{1N} - \Delta A_{1F}}{A_{1G}(y_{DN}) - A_{1G}(y_{DF})},$$ (14)

wobei

$$\Delta A_{1F} = A_{1Ferne} - A_{1G}(y_{DF});$$

$$\Delta A_{1N} = A_{1Nähe} - A_{1G}(y_{DN});$$

$A_{1Ferne}$ den reziproken Wert der Sollobjektentfernung im Fernbezugspunkt;
$A_{1Nähe}$ den reziproken Wert der Sollobjektentfernung im Nahbezugspunkt; Nähe;
$y_F$ die vertikale Koordinate des Fernbezugspunkts; und
$y_N$ die vertikale Koordinate des Nahbezugspunkts

bezeichnen.

Die Geradenkoeffizienten *c* und *m* werden beispielsweise wie folgt berechnet:

In einem ersten Schritt werden die Abweichungen der Werte der Start-Objektabstandsfunktion $A_{1G}(y)$ in den Bezugs- bzw. Designpunkten *DF* (mit den Koordinaten $(x=x_0, y_{DF})=(u=0, y_{DF})$) und *DN* (mit den Koordinaten $(x=x_0, y_{DN})=(u=0, y_{DN})$) von den entsprechenden (individuellen) Werten $A_{1Ferne}$ und $A_{1Nähe}$ des reziproken Sollobjektanstands (der reziproken Sollobjektentfernung) für diese Punkten ermittelt:

$$\Delta A_{1F} = A_{1Ferne} - A_{1G}(y_{DF})$$

$$\Delta A_{1N} = A_{1Nähe} - A_{1G}(y_{DN}).$$ (15)

Die Geradenkoeffizienten *c* und *m* können aus den zuvor ermittelten Abweichungen wie folgt berechnet werden:

$$c = \frac{\Delta A_{1F} A_{1G}(y_{DN}) - \Delta A_{1N} A_{1G}(y_{DF})}{A_{1G}(y_{DN}) - A_{1G}(y_{DF})}$$ (16)

$$m = \frac{\Delta A_{1N} - \Delta A_{1F}}{A_{1G}(y_{DN}) - A_{1G}(y_{DF})}$$

In den obigen Formeln bezeichnen:

$A_{1G}(y)$ die Start-Objektabstandsfunktion;
$A_{1Ferne}$ den Sollwert des reziproken Objektabstandes im Fernbezugspunkt (Designpunkt Ferne);
$A_{1Nähe}$ den Sollwert des reziproken Objektabstandes im Nahbezugspunkt (Designpunkt Nähe); und
$A_1(y)$ die korrigierte/angepasste Objektabstandsfunktion.

Durch diese angepasste Objektabstandsfunktion, welche eine lineare Funktion der Start-Objektabstandsfunktion ist, wird der Verlauf des reziproken Objektabstandes entlang der Hauptblicklinie nicht wesentlich geändert. Insbesondere unterscheiden sich die Steigungen bzw. Ableitungen der Grundfunktion $A_{1G}(y)$ und der abgeänderten/korrigierten Objektabstandsfunktion $A_1(y)$ lediglich um den konstanten Faktor $(1 + m)$ :

$$\frac{dA_1}{dy} = \frac{dA_{1G}}{dy} + m\frac{dA_{1G}}{dy} = \frac{dA_{1G}}{dy}(1+m) \tag{17}$$

Anders ausgedrückt wird die erste Ableitung der Start-Objektabstandsfunktion nur um einen Faktor $(1+m)$ verändert. Bei weitestgehender Vollkorrektion wird die Grundcharakteristik eines progressiven Brillenglases in der Umgebung der Hauptblicklinie jedoch vorwiegend durch den Verlauf der Objektabstandsfunktion $A_1(y)$ entlang der Hauptblicklinie bestimmt (Satz von Minkwitz). Die lineare Anpassung der Start-Objektabstandsfunktion ermöglicht es, die Designcharakteristik auch bei einer Anpassung der Objektabstände an geänderte Vorgaben in einem oder zwei Punkten mit vernachlässigbarem Rechenaufwand sehr gut zu erhalten.

Das oben beschriebene Verfahren lässt sich unabhängig vom Verlauf des reziproken Objektabstandes entlang der Hauptblicklinie anwenden. Ebenfalls ist es möglich, die Charakteristik der Objektabstandsfunktion entlang der Hauptblicklinie im Wesentlichen beizubehalten und gleichzeitig die Objektabstände in den Designpunkten/Bezugspunkten designabhängig zu variieren oder an den Bedürfnissen oder Wünschen des Brillenträgers anzupassen.

In diesem Beispiel kann die Start-Objektabstandsfunktion (Grundfunktion) $A_{1G}(y)$ eine beliebige analytische Funktion oder auch eine Interpolationsfunktion (Splinefunktion) sein. Es müssen keine Koeffizienten der Grundfunktion bekannt sein oder abgeändert werden. Wenn $A_{1G}(y)$ punktweise vorgegeben oder, wie in der Patentanmeldung DE 10 2009 005 847.8 beschrieben, vor der Optimierung abgeändert wird, eignet sich dieses Verfahren insbesondere hervorragend zum Angleichen der Objektabstandsfunktion an die individuellen Sollobjektentfernungen in den Designpunkten bzw. Bezugspunkten.

Die oben beschriebenen Transformationen der Start-Objektabstandsfunktion durch Überlagerung der Start-Objektanstandsfunktion mit einer Doppelasymptoten-Korrekturfunktion, durch Überlagerung der Start-Objektanstandsfunktion mit einer Gauss'schen Funktion oder durch eine lineare Anpassung können selbstverständlich in beliebiger Reihenfolge miteinander kombiniert werden.

In einem bevorzugten Beispiel umfasst computerimplementierte Verfahren zum Optimieren eines progressiven Brillenglases ferner die folgenden Schritte:

Vorgeben einer Start-Sollastigmatismusverteilung $Ast_{Soll_{start}}$ für das progressive Brillenglas;
Ermitteln einer transformierten Sollastigmatismusverteilung $Ast_{Soll_{neu}}$ und
Optimieren des progressiven Brillenglases anhand der transformierten Sollastigmatismusverteilung.

Das Ermitteln einer transformierten Sollastigmatismusverteilung $Ast_{Soll_{neu}}$ umfasst die Schritte:

Multiplizieren des Werts des maximalen temporalen Sollastigmatismus max_$Ast_{Soll\_}temporal_{start}$ der Start-Sollastigmatismusverteilung $Ast_{Soll_{start}}$ mit einem Faktor $k$:

$$\max\_Ast_{Soll}\_temporal_{neu} = k * \max\_Ast_{Soll}\_temporal_{start},$$

wodurch sich ein abgeänderter maximaler temporaler Astigmatismus max_$Ast_{Soll\_}temporal_{neu}$ ergibt, wobei der Faktor $k$ eine Funktion zumindest eines Verordnungswerts und/oder zumindest eines Parameters des Brillenglases oder dessen Anordnung vor den Augen des Brillenträgers ist; und
Transformieren der Start-Sollastigmatismusverteilung $Ast_{Soll_{start}}$ auf Basis des abgeänderten maximalen temporalen Astigmatismus max_$Ast_{Soll\_}temporal_{neu}$.

Wie bereits oben ausgeführt erfolgt die Optimierung von progressiven Brillengläsern in der Regel durch eine iterative Minimierung einer Zielfunktion, in welcher Ziel- bzw. Sollwerte für zumindest eine optische Größe (z.B. Astigmatismus und/oder Brechkraft) oder Ziel- bzw. Sollwerte für zumindest einen Abbildungsfehler (z.B. astigmatischer Fehler und/oder Refraktionsfehler) des progressiven Brillenglases eingehen. Der Refraktionsfehler stellt die Differenz des Brechwerts des Brillenglases von dem Brechwert, welcher mittels Refraktionsbestimmung ermittelt wird, dar. Der astigmatische Fehler stellt die Differenz des Astigmatismus des Brillenglases von dem Astigmatismus, welcher mittels Refraktionsbestimmung ermittelt wird, dar. Vorzugsweise handelt es sich dabei um Werte in Gebrauchsstellung des Brillenglases, d.h. unter Berücksichtigung des Systems Brillenglas-Auge. Freiheitsgrad bei der Optimierung der Zielfunktion ist üblicherweise die Pfeilhöhe der Vorder- oder der Rückfläche des Brillenglases oder sowohl der Vorder- als auch der Rückfläche, z.B. bei einem doppelprogressiven Brillenglas.

Eine designbasierte Optimierung eines progressiven Brillenglases kann zum Beispiel durch Minimierung einer Zielfunktion der Form:

$$F(\vec{x}) = \sum_{i=1}^{m} \left[ g_{i,Ast} (Ast_i - Ast_{i,Soll})^2 + ... \right] \tag{18}$$

oder der Form

$$F(\vec{x}) = \sum_{i=1}^{m} \left[ g_{i,\Delta R} (\Delta R_i - \Delta R_{i,Soll})^2 + g_{i,Ast} (Ast_i - Ast_{i,Soll})^2 + ... \right] \tag{19}$$

erfolgen.

In den obigen Formeln bezeichnen:

| | |
|---|---|
| $\Delta R_{i,Soll}$ | den Sollwert des lokalen Refraktionsfehlers/Brechwerts an der $i$-ten Bewertungsstelle; |
| $\Delta R_i$ | den tatsächlichen lokalen Refraktionsfehler/Brechwert an der $i$-ten Bewertungsstelle; |
| $Ast_{i,soll}$ | den Sollwert des lokalen astigmatischen Fehlers/Astigmatismus an der $i$-ten Bewertungsstelle; |
| $Ast_i$ | der tatsächliche lokale astigmatische Fehler/Astigmatismus an der $i$-ten Bewertungsstelle; |
| $g_{i,\Delta R}$ | die lokale Gewichtung des Refraktionsfehlers/Brechwert an der $i$-ten Bewertungsstelle; und |
| $g_{i,Ast}$ | die lokale Gewichtung des astigmatischen Fehlers/Astigmatismus an der $i$-ten Bewertungsstelle. |

Die in die Zielfunktion eingehenden Ist- und Sollwerte der zumindest einen optischen Eigenschaft können sowohl Sollwerte (Flächenwerte oder Werte in Gebrauchstellung) des Brillenglases als auch Sollwerte für zumindest einen Abbildungsfehler sein. Im Sinne dieser Anmeldung wird daher unter dem Begriff "Sollastigmatismus" sowohl der Astigmatismus des Brillenglases (als Flächenbrechwert oder in Gebrauchsstellung) als auch der astigmatische Fehler verstanden. Ebenfalls wird unter dem Begriff "Sollastigmatismusverteilung" im Sinne dieser Anmeldung sowohl die räumliche Verteilung der Sollwerte des Astigmatismus des Brillenglases als auch die räumliche Verteilung der Sollwerte des astigmatischen Fehlers verstanden. Die Sollwerte der zumindest einen optischen Eigenschaft des Brillenglases und insbesondere die Sollwerte des Astigmatismus oder des astigmatischen Fehlers charakterisieren das "Design" eines Brillenglases. Darüber hinaus kann das Brillenglasdesign ein geeignetes Objektabstandsmodell umfassen. Das Objektabstandsmodell kann beispielsweise eine Objektabstandsfunktion, welche als der reziproke Objektabstand entlang der Hauptblicklinie definiert ist, umfassen. Ein standardisiertes Objektabstandsmodel ist z.B. in DIN 58 208 Teil 2 (vgl. Bild 6) angegeben. Das Objektabstandsmodel kann jedoch von diesem standardisierten Objektabstandsmodel abweichen.

Die Sollastigmatismusverteilung, auf deren Basis das progressive Brillenglas optimiert wird, kann mittels einer Transformation eines bestehenden bzw. vorgegebenen Designs (Startdesign, Basisdesign) erhalten werden. So wird z.B. in DE 10 2008 015 189 vorgeschlagen, Sollastigmatismusverteilungen für unterschiedliche Additionen mittels einer Transformation einer vorgegebenen Basis- oder Startsollastigmatismusverteilung, welche für eine vorgegebene Basisaddition festgelegt worden ist, zu erhalten. In DE 10 2009 005 206 oder DE 10 2009 005 214 wird vorgeschlagen, mittels einer Manipulation einer vorgegebenen Basis-Sollisoastigmatismuslinie, Sollastigmatismusverteilungen mit unterschiedlichen Breiten des Fern- und/oder des Nahbereichs aus einer vorgegebenen Sollastigmatismusverteilung zu erzeugen. Die Wirkungsabhängigkeit des Sollastigmatismus kann über unterschiedliche Basisdesigns abgedeckt werden.

Das Startdesign (Basisdesign) weist in der Regel aufgrund der binokularen Abbildungseigenschaften eine annähernd symmetrische Verteilung des Sollastigmatismus in Bezug auf die Hauptblicklinie auf. Bei einer additions- und/oder wirkungs- und/oder progressionslängenabhängigen Transformation des Startdesigns wird die annähernd symmetrische Verteilung des Sollastigmatismus im Wesentlichen beibehalten.

Es ist erkannt worden, dass für bestimmte Kombinationen von Verordnungswerten und/oder Parametern des Brillenglases und/oder dessen Anordnung vor den Augen des Brillenträgers (d.h. dessen Gebrauchsstellung) die oben beschriebene Vorgehensweise, bei welcher die in die Zielfunktion eingehende Sollastigmatismusverteilung annähernd symmetrisch in Bezug auf die Hauptblicklinie ist, zu suboptimalen Ergebnissen führen kann. So sind z.B. die Gradienten der Flächeneigenschaften der progressiven Fläche und/oder die Gradienten der Gebrauchswerte häufig relativ groß. Dies führt zu verschlechterten Gebrauchsstellungseigenschaften des Brillenglases (Astigmatismus und/oder Brechwert in Gebrauchsstellung des Brillenglases).

Diese Nachteile treten insbesondere bei Brillengläsern mit flacher Basiskurve (d.h. mit einer Basiskurve im Bereich von 0 dpt bis 4 dpt) und höheren Rückflächenkrümmungen (d.h. Rückflächenkrümmungen größer oder gleich -6 dpt) auf, insbesondere in Kombination mit:

- hohen Verordnungszylindern, d.h. Zylindern im Bereich von größer oder gleich 2 dpt, und/oder
- schiefen Achslagen des Verordnungszylinders, d.h. Achslagen des Verordnungszylinders von 0 bis 90° nach Tabo bei rechten Brillengläsern, und von 90 bis 180° bei linken Brillengläsern; und/oder
- geringerer Verordnungsaddition, d.h. eine Addition < 2,0 dpt, vorzugsweise eine Addition ≤ 1,5 dpt,

und/oder in Kombination mit größeren Verkippungswinkeln des Brillenglases vor dem Auge, d.h. Verkippungswinkeln im Bereich von größer oder gleich 5°.

Es ist ferner erkannt worden, dass ein Grund für das Auftreten höherer Gradienten der Flächeneigenschaften bei Brillengläsern, welche eine der obigen Kombinationen aufweisen, die symmetrische Verteilung des Sollastigmatismus in Bezug auf die Hauptblicklinie ist. So kann z.B. bei einer torischen Überlagerung einer vorgegebenen Starfläche mit einer torischen oder atorischen Fläche temporal ein astigmatischer Fehler auftreten, welcher teilweise deutlich unter dem Wert des Sollastigmatismus gemäß der symmetrischen Sollastigmatismusverteilung liegt. Der Optimierungsprozess versucht allerdings die symmetrischen Vorgaben für den Sollastigmatismus zu erreichen und "verbiegt" deshalb die zu optimierenden Fläche an dieser Stelle stärker, als dies für niedrige Additionen notwendig wäre.

Vorzugsweise wird daher der temporale Sollastigmatismus in der Peripherie des Brillenglases mit einem Faktor $k$ multipliziert, um diesem Umstand Rechnung zu tragen. Der Faktor $k$ nimmt vorzugsweise den Wert 1 an, wenn keine Manipulation der Sollastigmatismuswerte stattfinden soll und einen Wert kleiner als 1 an, wenn die Sollastigmatismuswerte manipuliert werden sollen. Der Faktor $k$ ist eine Funktion zumindest eines Verordnungswerts (wie z.B. Sphäre, Zylinder, Zylinderachse, Prisma, Prismenbasis und/oder Addition) und/oder zumindest eines Parameters des Brillenglases oder dessen Anordnung vor den Augen des Brillenträgers (d.h. dessen Gebrauchsstellung). Die Parameter des Brillenglases und/oder dessen Anordnung vor den Augen des Brillenträgers (d.h. dessen Gebrauchsstellung) sind beispielsweise der Fassungsscheibenwinkel, der Verkippungswinkel, der Hornhautscheitelabstand (HSA), die Vorneigung oder der pantoskopische Winkel, die Pupillendistanz, der Augendrehpunktabstand und/oder andere Parameter. Es kann sich dabei um durchschnittliche (wie z.B. in DIN 58 208 Teil 2 definiert) oder individuell für einen bestimmten Brillenträger ermittelte Werte handeln.

Insbesondere wird vorgeschlagen, den maximalen temporalen Sollastigmatismus $max\_Ast_{Soll}\_temporal_{start}$ (welcher in der Regel in der Peripherie des Brillenglases auftritt) der vorgegebenen Start-Sollastigmatismusverteilung $Ast_{soll,start}$ mit einem Faktor $k$ zu multiplizieren, wodurch sich ein neuer, transformierter, maximaler temporaler Sollastigmatismus $max\_Ast_{soll}\_temporal_{neu}$ ergibt:

$$\max\_Ast_{Soll}\_temporal_{neu} = k * \max\_Ast_{Soll}\_temporal_{start}. \qquad (20)$$

Die Start-Sollastigmatismusverteilung $Ast_{start}$ über das Brillenglas kann die Sollastigmatismusverteilung einer vorgegebenen progressiven Startfläche sein. Alternativ kann ein Sollastigmatismusmodell vorgegeben werden, anhand dessen die Start-Sollastigmatismusverteilung berechnet werden kann. Das Sollastigmatismusmodell kann z.B. das in der DE 10 2008 015 189, DE 10 2009 005 206 oder DE 10 2009 005 214 beschriebene Sollastigmatismusmodell sein. Insbesondere kann der Verlauf einer Hauptlinie sowie der Verlauf zumindest einer Basis-Sollisoastigmatismuslinie parametrisch oder numerisch vorgeben werden. Alle Sollastigmatismuswerte zwischen der Hauptlinie und der Basis-Sollisoastigmatismuslinie sowie alle Sollastigmatismuswerte zwischen der Basis-Sollisoastigmatismuslinie und der Peripherie des Brillenglases können nachfolgend mittels geeigneter Interpolationen (z.B. einer linearen, quadratischen, kubischen Interpolation) der vorgegebenen Sollastigmatismuswerte auf der Hauptlinie und der Basis-Sollisoastigmatismuslinie und gegebenenfalls anderer vorgegebener Werte ermittelt werden, wie in DE 10 2009 005 206 oder DE 10 2009 005 214 beschrieben.

In einem nächsten Schritt wird anhand des neuen, transformierten maximalen temporalen Astigmatismus eine neue, transformierte Sollastigmatismusverteilung $Ast_{soll_{neu}}$ ermittelt. Dabei werden die nasalen Sollastigmatismuswerte bzw. die nasale Sollastigmatismusverteilung vorzugsweise nicht verändert.

Die neue, transformierte Sollastigmatismusverteilung $Ast_{soll_{neu}}$ kann durch eine Multiplikation aller temporalen Werte des Sollastigmatismus (d.h. aller Sollastigmatismuswerte auf der temporalen Seite der Hauptblicklinie) mit dem Faktor $k$ erhalten werden:

$$Ast_{Soll_{neu}}\_temporal = k * Ast_{Soll_{start}}\_temporal. \qquad (21)$$

Gemäß einem Beispiel wird jedoch die neue, transformierte Sollastigmatismusverteilung $Ast_{soll_{neu}}$ mittels einer Interpolation der Sollastigmatismuswerte zwischen einer vorgegebenen temporalen Basis-Sollisoastigmatismuslinie (in der Regel die 0,5 dpt Basis-Sollisoastigmatismuslinie) und der Peripherie des Brillenglases erhalten, wobei der abgeänderte Wert des maximalen, temporalen Astigmatismus $max\_Ast_{Soll\_}temporal_{neu}$ berücksichtigt wird. Die Druckschriften DE 10 2009 005 206 oder DE 10 2009 005 214 beschreiben jeweils Verfahren (Parallelenkurvenmodell-Verfahren oder Kegelstumpfmodell-Verfahren) zum Berechnen einer Sollastigmatismusverteilung anhand einer vorgegebenen Basis-Sollisoastigmatismuslinie und des maximalen, temporalen Astigmatismus. Die vorgegebene 0,5 dpt Basis- Sollisoastigmatismuslinie kann anhand der Start-Sollastigmatismusverteilung bestimmt werden. Die temporalen Sollastigmatismuswerte zwischen der Hauptlinie und der temporalen Basis-Sollisoastigmatismuslinie werden dabei vorzugsweise nicht verändert. Neben einem geringeren Wert des maximalen temporalen Sollastigmatismus weist die neue, transformierte Sollastigmatismusverteilung in der Regel geringere Gradienten des Sollastigmatismus in der Peripherie auf.

Vorzugsweise umfasst das Transformieren der Start-Sollastigmatismusverteilung $Ast_{Soll_{start}}$ auf Basis des abgeänderten maximalen temporalen Astigmatismus $max\_Ast_{Soll\_}temporal_{neu}$ folglich eine Interpolation der Sollastigmatismuswerte zwischen einer vorgegebenen Basis-Sollisoastigmatismuslinie und der Peripherie des Brillenglases unter Berücksichtigung des abgeänderten maximalen temporalen Astigmatismus $max\_Ast_{Soll\_}temporal_{neu}$.

Die Optimierungsvorgaben für das Brillenglas, einschließlich der Start-Sollastigmatismusverteilung und der transformierten Sollastigmatismusverteilung $Ast_{Soll_{neu}}$, können in einem geeigneten Koordinatensystem angegeben werden.

Ein beispielhaftes Koordinatensystem ist ein Koordinatensystem in der zu optimierenden objektseitigen oder augenseitigen Fläche des Brillenglases, wobei der Ursprung des Koordinatensystems beispielsweise mit dem geometrischen Mittelpunkt des rohrunden Brillenglases oder mit dem Zentrier- oder Anpaßpunkt des Brillenglases zusammenfällt. Die vertikale ("$y$") und horizontale ("$x$") Achse liegen in der tangentialen Ebene zu der jeweiligen augenseitigen oder objektseitigen Fläche des Brillenglases in dem geometrischen Mittelpunkt bzw. dem Zentrier- bzw. Anpaßpunkt. Die vertikale Richtung bezieht sich vorzugsweise auf die vertikale Richtung in Gebrauchsstellung des Brillenglases, wobei das Brillenglas beispielsweise in einer durchschnittlichen Gebrauchsstellung (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet. In diesem Koordinatensystem gilt $Ast_{Soll_{start}} = Ast_{Soll_{start}}(x,y)$ und $Ast_{Soll_{neu}} = Ast_{Soll_{neu}}(x,y)$.

Es ist selbstverständlich möglich, die räumliche Verteilung der Abbildungsfehler in anderen geeigneten Koordinatensystemen anzugeben.

Insbesondere ist es bevorzugt, die Sollastigmatismuswerte sowie die Optimierungswerte im Koordinatensystem der zu optimierenden Fläche bezüglich der Hauptlinie oder der Hauptblicklinie (wobei auf der Hauptlinie/Hauptblicklinie $u = 0$ gilt) und nicht bezüglich der $y$ - Achse ($x = 0$) anzugeben, d.h. in der Form $Ast_{Soll_{start}} = Ast_{Soll_{start}}(u,y)$, $Ast_{Soll_{neu}} = Ast_{Soll_{neu}}(u,y)$. Werden die Sollwerte bzw. die Optimierungssollwerte in Bezug auf die Hauptlinie vorgegeben, ist es bei einer Änderung der zu berücksichtigenden Gebrauchsstellung des Brillenglases, und insbesondere bei einer Änderung der Pupillendistanz, des Hornhautscheitelabstands, der Vorneigung, des Objektabstandsmodells, etc. ausreichend, lediglich einen Abgleich der Hauptlinie an die veränderte Hauptblicklinie durchzuführen. Die Sollwerte bzw. die Optimierungssollwerte werden dann automatisch angepasst.

Der Faktor $k$, welcher auch als Manipulationsfaktor bezeichnet wird, kann wie folgt berechnet werden:

$$k = \left(1 - g_{Verordnung} - h\right), \qquad (22)$$

wobei

$g_{Verordnung}$ eine Funktion zumindest eines Verordnungswerts und
$h$ eine Funktion zumindest eines (individuellen) Parameters des Brillenglases oder dessen Anordnung vor den Augen des Brillenträgers ist.

Da die oben genannten Nachteile verstärkt bei Brillengläsern mit flacher Basiskurve und krummer Rückfläche auftreten, können vorzugsweise diese beiden Parameter (d.h. Basiskurve und/oder Krümmung der Rückfläche) durch einen asymptotischen Vorfaktor $v$ berücksichtigt werden:

$$k = v * (1 - g_{Verordnung} - h),$$ (23)

wobei

$g_{Verordnung}$ eine Funktion zumindest eines Verordnungswerts;
$h$ eine Funktion zumindest eines Parameters des Brillenglases oder dessen Anordnung vor den Augen des Brillenträgers; und
$v$ ein Vorfaktor ist, welcher eine Funktion der Verordnung, insbesondere der Fernverordnung (bzw. der Verordnung im Fernbezugspunkt), und/oder der Basiskurve des Brillenglases und/oder der Krümmung der Rückfläche des Brillenglases ist.

Beispielsweise kann der asymptotische Vorfaktor $v$ derart festgelegt werden, dass der Manipulationsfaktor $k$ nur bei Minusgläsern angewendet wird.

Der Vorfaktor $v$ kann eine Doppelasymptotenfunktion der Fernverordnung, und/oder der Basiskurve des Brillenglases und/oder der Krümmung der Rückfläche des Brillenglases sein. Der Vorfaktor $v$ kann zum Beispiel über eine Doppelasymptotenfunktion der Form:

$$v = b + \frac{a}{(1 + e^{c(x+d)^m})}$$ (24)

realisiert werden, wobei für $x$ z.B. die mittlere Wirkung oder die Sphäre der Fernverordnung eingesetzt werden kann. Für negativ gewählte c entspricht der Wert $b$ dem Faktor $k$, und $(b + a) = 1{,}0$, so dass:

$$v = b + \frac{a}{(1 + e^{c(x+d)^m})} = k + \frac{1-k}{(1 + e^{c(x+d)^m})}$$

(24a)

gilt.

Es ist jedoch denkbar, die Abhängigkeit des Vorfaktors von der Fernteilverordnung und/oder der Basiskurve und/oder die Krümmung der Rückfläche mittels anderer geeigneter Funktionen zu beschreiben.

Vorzugsweise ist die Funktion $g_{Verordnung}$ eine Funktion des Verordnungsastigmatismus und/oder der verordneten Zylinderachse und/oder der verordneten Addition. Der Verordnungsastigmatismus, die verordnete Zylinderachse und die verordnete Addition sind die vorgegebenen Werte, welche z.B. durch Refraktionsbestimmung von einem Augenoptiker oder einen Augenarzt bestimmt werden. Das Verfahren umfasst dementsprechend vorzugsweise einen Schritt des Erfassens der Verordnungswerte, insbesondere des Verordnungsastigmatismus, und/oder der verordneten Zylinderachse, und/oder der verordneten Addition.

Vorzugsweise wird die Abhängigkeit der Funktion $g_{Verordnung}$ von der Zylinderachsenlage durch den Faktor (durch die Funktion) $f_{(Zylindeachse)}$:

$$f_{(Zylinderachslage)} = a * \sin^3(2 * Zylinderachslage),$$ (25)

beschrieben, wobei der Parameter *a* vorzugsweise im Bereich von 0,05 bis 1,0, weiter bevorzugt im Bereich 0,3 bis 0,6 liegt, und besonders bevorzugt den Wert 0,4 annimmt.

Die Abhängigkeit der Funktion $g_{Verordnung}$ von dem Verordnungsastigmatismus wird vorzugsweise durch den Faktor (durch die Funktion) $f_{(Verordnungsastigmatismus)}$ :

$$f_{(Verordnungsastigmatismus)} = \frac{Verordnungsastigmatismus}{b}, \qquad (26)$$

beschrieben, wobei der Parameter *b* vorzugsweise im Bereich 2 bis 6, und weiter bevorzugt im Bereich 4 bis 6 liegt. Besonders bevorzugt nimmt *b* den Wert des maximalen Verordnungsastigmatismus an.

Vorzugsweise ist die Funktion $g_{Verordnung}$ eine lineare Funktion der Addition, wobei die Abhängigkeit der Funktion $g_{Verordnung}$ durch den Faktor bzw. durch die Funktion $f_{(Addition)}$ :

$$f_{(Addition)} = c * Addition + d, \qquad (27)$$

beschrieben werden kann.

Die Gerade der Addition wird vorzugsweise so gewählt, dass für die maximale Verordnungsaddition keine Anpassung stattfindet (d.h. $f_{(Addition_{max})} = 0$) und bei der geringsten erlaubten Addition $f_{(Addition_{min})} = 1,0$ gilt. Vorzugsweise liegt der Geradenparameter *c* im Bereich zwischen 0 und -1 und weiter bevorzugt im Bereich zwischen -0,75 und -0,3. Besonders bevorzugt nimmt *c* einen Wert von -0,3636 an. Vorzugsweise liegt der Parameter *d* im Bereich von 2,0 bis 0, weiter bevorzugt im Bereich zwischen 2 und 1. Besonders bevorzugt nimmt *d* den Wert 1,2727 an.

Die Funktion $g_{Verordnung}$ wird vorzugsweise durch eine Multiplikation von zumindest zwei der Faktoren bzw. Funktionen $f_{(Zylindeachse)}$, $f_{(Verordnungsastigmatismus)}$ und $f_{(Addition)}$, vorzugsweise durch eine Multiplikation aller drei Faktoren erhalten.

Vorzugsweise ist *h* eine Funktion des Verkippungswinkels des Brillenglases ($h = f_{(Verkippunkgswinel)}$), vorzugsweise eine Funktion der Form:

$$f_{(Verkippungswinkel)} = \frac{Verkippungswinkel}{g}, \qquad (28)$$

wobei *g* eine vorgegebene Konstante ist. Da der Einfluss des Verkippungswinkels nicht sehr groß ist, ist *g* vorzugsweise im Bereich 50 bis 500, weiter bevorzugt im Bereich von 100 bis 300 und besonders bevorzugt beträgt der Wert etwa 200.

Der Verkippungswinkel ist der Winkel, welcher von der horizontalen Tangente der objektseitigen Fläche des Brillenglases an einem vorgegebenen Bezugspunkt und einer horizontalen Referenzgeraden, eingeschlossen wird. Der vorgegebene Bezugspunkt ist der Schnittpunkt des augenseitigen horizontalen Hauptstrahls in Nullblickrichtung des Benutzers mit der objektseitigen Fläche des Brillenglases. Die horizontale Referenzgerade liegt in einer Ebene, welche senkrecht zu dem horizontalen Hauptstrahl in Nullblickrichtung des Brillenträgers ist. Bezüglich der Definition und der Bestimmung des Verkippungswinkels wird auf DE 10 2004 059 448 A1 verwiesen (dort "horizontaler Kippwinkel" genannt). Der Verkippungswinkel ist einer der Parameter der Anordnung des Brillenglases vor den Augen des Brillenträgers.

Anstelle des Verkippungswinkels kann *h* eine Funktion des Fassungsscheibenwinkels (FSW) sein, vorzugsweise eine Funktion der Form:

$$h = f_{(FSW)} = \frac{FSW}{g}. \qquad (29)$$

Des Weiteren können andere individuelle oder durchschnittliche Parameter der Gebrauchsstellung des Brillenglases, wie z.B. Vorneigung, ebenfalls berücksichtigt werden.

Vorzugsweise wird der Faktor *k* in Abhängigkeit von der Zylinderachslage, des Verordnungsastigmatismus, der Addition und des Verkippungswinkels oder Fassungsscheibenwinkels berechnet:

$$k = 1 - f_{(Zylinderachslage)} * f_{(Verordnungsastigmatismus)} * f_{(Addition)} - f_{(Verkippungswinkel)}$$

$$(30)$$

oder

$$k = v * (1 - f_{(Zylinderachslage)} * f_{(Verordnungsastigmatismus)} * f_{(Addition)} - f_{(Verkippungswinkel)}),$$

$$(31)$$

wobei die einzelnen Faktoren bzw. Funktionen *f* jeweils nach den Gleichungen (25) bis (29) berechnet werden.

Ein Vorteil eines nach den Formeln (30) oder (31) berechneten Faktors *k* ist, dass der Faktor *k* automatisch einen Wert von 1 annimmt, wenn keine Transformation der Start-Sollastigmatismusverteilung stattfinden soll.

Vorzugsweise wird der Faktor *k* nur bei Verordnungszylinderachslagen von 0 bis 90° nach Tabo bei Angabe in Pluszylinderschreibweise bei rechten Gläsern, bei linken Gläsern bei Achslagen von 90 bis 180° angewendet. Bei Zylinderachslagen in diesen Bereichen treten die oben beschriebenen Nachteile verstärkt auf. Sind die Zylinderachslagen in den anderen Quadranten, so kann die Optimierung des Brillenglases nach dem konventionellen Verfahren (z.B. mit dem in DE 10 2008 015 189 offenbarten Verfahren) unter Berücksichtigung einer symmetrischen Sollastigmatismusvorgabe erfolgen.

Nach der erfolgten Skalierung des temporalen Astigmatismus können die Sollastigmatismuswerte gegebenenfalls weiter skaliert oder transformiert werden. So kann z.B. die Progressionslänge analog zu $f_{(Addition)}$ von der Addition abhängen, wie in DE 10 2008 015 189 beschrieben. Ebenfalls können die Sollastigmatismuswerte in Abhängigkeit von der Addition skaliert werden, wie z.B. in DE 10 2008 015 189 beschrieben. Die Reihenfolge der unterschiedlichen Skalierungen/Transformationen der Start-Sollastigmatismusverteilung kann ebenfalls variieren.

Wie bereits oben ausgeführt, kann die Optimierung des Brillenglases anhand der transformierten Sollastigmatismusverteilung eine Minimierung einer Zielfunktion umfassen, in der die Werte der zuvor ermittelten transformierten Sollastigmatismusverteilung als Zielwerte eingehen. Vorzugsweise umfasst die Optimierung des Brillenglases anhand der transformierten Sollastigmatismusverteilung eine Minimierung einer Zielfunktion der Form:

$$F(\vec{x}) = \sum_{i=1}^{m} \left[ g_{i,Ast} (Ast_i - Ast_{i,Soll_{neu}})^2 + ... \right],$$

$$(32)$$

wobei

$Ast_{i,Soll_{neu}}$ den Sollastigmatismuswert der transformierten Sollastigmatismusverteilung $Ast_{Soll_{neu}}$ an der *i*-ten Bewertungsstelle;
$Ast_i$ den tatsächliche lokale Astigmatismus an der *i-ten* Bewertungsstelle; und
$g_{i,Ast}$ die lokale Gewichtung des Sollastigmatismuswerts an der *i*-ten Bewertungsstelle

bezeichnen.

In der obigen Formel ist $Ast_{i,Soll_{neu}}$ die zuvor ermittelte, transformierte Sollastigmatismusverteilung $Ast_{Soll_{neu}}$ an der jeweiligen *i*-ten Bewertungsstelle.

Ferner bevorzugt geht in die Zielfunktion ebenfalls der Refraktionsfehler/Brechwert $\Delta R$ ein, so dass das Berechnen bzw. Optimieren des Brillenglases eine Minimierung der Zielfunktion:

$$F(\vec{x}) = \sum_{i=1}^{m} \left[ g_{i,\Delta R} (\Delta R_i - \Delta R_{i,Soll_{neu}})^2 + g_{i,Ast} (Ast_i - Ast_{i,Soll_{neu}})^2 + ... \right] \quad (33)$$

umfasst, wobei

$\Delta R_{i,Soll_{neu}}$     den Sollwert des lokalen Refraktionsfehlers/Brechwerts an der $i$-ten Bewertungsstelle;

$\Delta R_i$     den tatsächlichen Wert des lokalen Refraktionsfehlers/Brechwerts an der $i$-ten Bewertungsstelle; und

$g_{i,\Delta R}$     die lokale Gewichtung der Refraktionsfehlers/Brechwerts an der $i$-ten Bewertungsstelle

bezeichnen.

Die Verteilung des Sollbrechwerts oder des Sollrefraktionsfehlers kann ähnlich wie die Sollastigmatismusverteilung aus einer Start-Sollbrechwertverteilung oder einer Startsollrefraktionsfehlerverteilung ermittelt und durch Multiplikation mit einem Faktor abgeändert werden. Die Verteilung des Sollbrechwerts oder des Sollrefraktionsfehlers kann jedoch ebenfalls anhand der zuvor ermittelten, transformierten Sollastigmatismusverteilung ermittelt werden.

Vorzugsweise erfolgt die Optimierung des Brillenglases in Gebrauchsstellung des Brillenglases. Vorzugsweise werden bei der Optimierung des Brillenglases neben den individuellen Verordnungswerten (Sph, Zyl, Achse, Add, Prisma, Basis), Parameter der individuellen Lage bzw. Anordnung des Brillenglases vor dem Auge des Brillenträgers (z.B. Hornhautscheitelabstand (HSA), Fassungsscheibenwinkel (FSW), Vorneigung bzw. pantoskopischer Winkel) und/oder physiologische Parameter des Brillenträgers (z.B. Pupillendistanz) berücksichtigt. Alternativ können durchschnittliche Parameter der Lage bzw. Anordnung des Brillenglases vor dem Auge des Brillenträgers und/oder durchschnittliche physiologische Parameter des Brillenträgers berücksichtigt werden. Das progressive Brillenglas kann "online" nach Bestelleingang als Unikat optimiert und berechnet werden.

Vorzugsweise umfasst das Verfahren ferner die Schritte:

Erfassen der Verordnungswerte des Brillenglases; und

Erfassen der vorzugsweise individuellen Parameter des Brillenglases und/oder der Anordnung des Brillenglases vor den Augen des Brillenträgers.

Mit der oben beschriebenen Vorgehensweise ist es möglich, bei einem bestehenden Gleitsichtglasdesign (Startdesign, Basisdesign) die für die Optimierung nach Zielfunktionen notwendige Sollastigmatismusverteilung für spezielle Wirkungen derart zu manipulieren, dass die Zielvorgabe leichter erreicht werden kann. Somit können die negativen Auswirkungen auf die optimierten Flächen- bzw. Gebrauchsstellungseigenschaften von nicht vorteilhaften Sollwertvorgaben deutlich reduziert werden. Dies verbessert auch direkt die Gebrauchsstellungseigenschaften.

Die oben beschriebene Verfahren sowie die entsprechende Vorrichtungen eignen sich sowohl für das Erzeugen von Designs bzw. Designvarianten für konventionelle oder wirkungsoptimierte progressive Brillengläser, als auch für das Erzeugen von Designs bzw. Designvarianten für individuell optimierte progressive Brillengläser.

Wie bereits oben ausgeführt, kann die Optimierung des Brillenglases eine Minimierung einer Zielfunktion umfassen, in der Sollwerte für den Sollastigmatismus und/oder für den Brechwertfehler (vgl. Gleichungen (18) und (18) oder Gleichungen (32) und (33)) eingehen. Die in die Zielfunktion eingehenden Werte können die gemäß dem oben beschriebenen Verfahren ermittelten Werte einer asymmetrischen Sollastigmatismusverteilung ($Ast_{Soll_{neu}}$) sein. Die Sollastigmatismusverteilung kann jedoch auch eine beliebige vorgegebene Sollastigmatismusverteilung sein, z.B. eine Sollastigmatismusverteilung, welche mit dem in der DE 10 2008 015 189, DE 10 2009 005 206 oder DE 10 2009 005 214 offenbarten Verfahren ermittelt wurde. Die Brechwertverteilung des Brillenglases, deren Sollwerte in die Zielfunktion eingehen, ist vorzugsweise eine Brechwertverteilung, welche unter Berücksichtigung eines vorgegebenen Akkomodationsmodells des Auges des Brillenträgers und der zuvor ermittelten Objektabstandsfunktion bestimmt wird. Die Sollbrechwertverteilung kann zum Beispiel derart bestimmt werden, dass entlang der Hauptblicklinie eine im Wesentlichen (d.h. im Rahmen tolerierbarer Restfehler) vollständige Korrektion mit dem Brillenglas vorliegt. Anders ausgedrückt werden die bei einer Blickbewegung entlang der Hauptblicklinie anvisierten Objekte, deren Objektabstand durch die Objektabstandsfunktion gegeben ist, optimal in der Fovea des Auges abgebildet.

Vorzugsweise erfolgt die Optimierung des Brillenglases in Gebrauchsstellung des Brillenglases. Vorzugsweise werden bei der Optimierung des Brillenglases neben den individuellen Verordnungswerten (Sph, Zyl, Achse, Add, Prisma, Basis), Parameter der individuellen Lage bzw. Anordnung des Brillenglases vor dem Auge des Brillenträgers (z.B. Hornhautscheitelabstand (HSA), Fassungsscheibenwinkel (FSW), Vorneigung bzw. pantoskopischer Winkel), physiologische Parameter des Brillenträgers (z.B. Pupillendistanz) berücksichtigt. Alternativ können durchschnittliche Parameter der Lage bzw. Anordnung des Brillenglases vor dem Auge des Brillenträgers und/oder durchschnittliche physiologische Parameter des Brillenträgers berücksichtigt werden. Das progressive Brillenglas kann online nach Bestelleingang als Unikat optimiert und berechnet werden.

Vorzugsweise umfasst das Verfahren ferner die Schritte:

Erfassen der Verordnungswerte des Brillenglases; und

Erfassen der vorzugsweise individuellen Parameter des Brillenglases und/oder der Anordnung des Brillenglases vor den Augen des Brillenträgers.

Erfindungsgemäß werden ferner ein Computerprogrammerzeugnis, d.h. ein in der Patentanspruchskategorie einer Vorrichtung beanspruchtes Computerprogramm, sowie ein Speichermedium mit darauf gespeichertem Computerprogramm bereitgestellt, wobei das Computerprogramm ausgelegt ist, wenn geladen und ausgeführt auf einem Computer, ein bevorzugtes Verfahren zum Optimieren eines progressiven Brillenglases gemäß dem ersten Aspekt der Erfindung durchzuführen.

Ferner wird gemäß einem weiteren Aspekt eine Vorrichtung zum Optimieren eines progressiven Brillenglases vorgeschlagen, umfassend Optimierungsmittel, welche ausgelegt sind, ein Berechnen bzw. Optimieren des Brillenglases nach einem bevorzugten Beispiels des Verfahrens zum Optimieren eines progressiven Brillenglases gemäß dem ersten Aspekt der Erfindung durchzuführen.

Die Vorrichtung zum Optimieren eines progressiven Brillenglases kann:

Objektabstandsfunktion-Vorgabemittel, welche ausgelegt sind, eine Start-Objektabstandsfunktion $A_{1G}(y)$ vorzugeben oder festzulegen;

Objektentfernungserfassungsmittel, welche ausgelegt sind, Objektentfernungsdaten zu erfassen, wobei die Objektentfernungsdaten eine Objektentfernung in zumindest einem vorgegebenen Punkt auf der Hauptblicklinie umfassen;

Objektabstandsfunktionänderungsmittel zum Abändern bzw. Transformieren der Start-Objektabstandsfunktion in Abhängigkeit von den erfassten Objektentfernungsdaten; und

Brillenglas-Optimierungsmittel zum Optimieren des progressiven Brillenglases, wobei bei der Optimierung des Brillenglases die transformierte Objektabstandsfunktion berücksichtigt wird,

umfassen.

Die Objektabstandsfunktion gibt den reziproken Objektabstand bzw. die reziproke Objektentfernung entlang der Hauptblicklinie als Funktion der vertikalen Koordinate $y$ an.

Das Abändern oder Transformieren der Start-Objektabstandsfunktion $A_{1G}(y)$ umfasst ein Überlagern $A_1(y)=A_{1G}(y)+A_{1Korr}(y)$ der Start-Objektabstandsfunktion $A_{1G}(y)$ mit einer Korrekturfunktion $A_{1Korr}(y)$. Die Korrekturfunktion weist zumindest einen variablen Parameter auf, welcher derart in Abhängigkeit von den erfassten Objektentfernungsdaten bestimmt wird, dass der Wert der abgeänderten Start-Objektabstandsfunktion in zumindest einem vorgegebenen Punkt gleich dem reziproken Wert der erfassten Sollobjektentfernung für diesen Punkt ist.

Die Objektabstandsfunktion-Vorgabemittel können Speichermittel umfassen, in welchen die Start-Objektabstandsfunktion oder die Parameter der Start-Objektabstandsfunktion, anhand deren die Start-Objektabstandsfunktion rekonstruiert werden, kann dauerhaft oder temporär gespeichert werden. Die Objektentfernungserfassungsmittel können zumindest eine interaktive grafische Benutzerschnittstelle (GUI) umfassen, welche es einem Benutzer ermöglicht, Daten bezüglich der gewünschten Objektentfernungen in zumindest einem vorgegebenen Punkt anzugeben und gegebenenfalls zu verändern.

Die Objektabstandsfunktionänderungsmittel und die Brillenglas-Optimierungsmittel können mittels entsprechend konfigurierten bzw. programmierten herkömmlichen Computern, spezialisierter Hardware und/oder Computernetzen bzw. Computersystemen implementiert werden. Der gleiche Computer bzw. das gleiche Computersystem, welcher/welches die Berechnung einer transformierten Objektabstandsfunktion (und gegebenenfalls einer transformierten Sollastigmatismusverteilung) durchführt, kann ebenfalls die Optimierung des Brillenglases nach der transformierten Objektabstandsfunktion durchführen. Es ist jedoch selbstverständlich möglich, dass die Berechnung der transformierten Objektabstandsfunktion und die Berechnung des Brillenglases nach der transformierten Objektabstandsfunktion in separaten Recheneinheiten, beispielsweise in separaten Computern oder Computersystemen erfolgen. Die Objektabstandsfunktionänderungsmittel und die Brillenglas-Optimierungsmittel können mittels geeigneter Schnittstellen miteinander in Signalverbindung stehen.

Die Objektabstandsfunktionänderungsmittel können ebenfalls mittels geeigneter Schnittstellen in einer Signalverbindung mit dem Objektabstandsfunktion-Vorgabemittel stehen und insbesondere die in den Speichermitteln gespeicherten Daten auslesen und/oder modifizieren.

Ferner können die Objektabstandsfunktionänderungsmittel und/oder die Brillenglas-Optimierungsmittel vorzugsweise jeweils interaktive grafische Benutzerschnittstellen (GUI) umfassen, welche es einem Benutzer ermöglichen, die Berechnung der transformierten Objektabstandsfunktion und die Optimierung des progressiven Brillenglases zu visualisieren und gegebenenfalls durch Veränderung eines Parameters oder mehrerer Parameter zu steuern.

Zusätzlich kann die Vorrichtung zum Optimieren eines progressiven Brillenglases

Speichermittel zum Speichern einer Start-Sollastigmatismusverteilung $Ast_{Sollstart}$ für das progressive Brillenglas;

Sollastigmatismusverteilung-Berechnungsmittel, welche ausgelegt sind, eine transformierte Sollastigmatismusverteilung $Ast_{Sollneu}$ aus der Start-Sollastigmatismusverteilung zu ermitteln; und

Brillenglas-Optimierungsmittel, welche ausgelegt sind, ein progressives Brillenglases anhand der transformierten Sollastigmatismusverteilung zu optimieren.

Die Sollastigmatismusverteilung-Berechnungsmittel sind ausgelegt

ein Multiplizieren des Werts des maximalen temporalen Sollastigmatismus $max\_Ast_{Soll\_temporal_{start}}$ der Start-Sollastigmatismusverteilung $Ast_{Soll_{start}}$ mit einem Faktor $k$:

$$\max\_Ast_{Soll}\_temporal_{neu} = k * \max\_Ast_{Soll}\_temporal_{start},$$

wodurch sich ein abgeänderter maximaler temporaler Astigmatismus $max\_Ast_{Soll\_temporal_{neu}}$ ergibt, wobei der Faktor $k$ *eine* Funktion zumindest eines Verordnungswerts und/oder zumindest eines Parameters es Brillenglases oder dessen Anordnung vor den Augen des Brillenträgers ist; und
ein Transformieren der Start-Sollastigmatismusverteilung $Ast_{Soll_{start}}$ auf Basis des abgeänderten maximalen temporalen Astigmatismus $max\_Ast_{Soll\_temporal_{neu}}$

durchzuführen.
Die Start-Sollastigmatismusverteilung $Ast_{Soll_{start}}$ kann in einem Speicher dauerhaft oder temporär gespeichert werden. Die Sollastigmatismusverteilung-Berechnungsmittel und die Brillenglas-Optimierungsmittel können mittels entsprechend konfigurierten bzw. programmierten herkömmlichen Computern, spezialisierter Hardware und/oder Computernetzen bzw. Computersystemen implementiert werden. Es ist möglich, dass der gleiche Computer bzw. das gleiche Computersystem derart konfiguriert bzw. programmiert ist, sowohl die Berechnung einer transformierten Sollastigmatismusverteilung als auch die Optimierung des Brillenglases nach der transformierten Sollastigmatismusverteilung durchzuführen. Es ist jedoch selbstverständlich möglich, dass die Berechnung der transformierten Sollastigmatismusverteilung und die Berechnung des Brillenglases nach der transformierten Sollastigmatismusverteilung in separaten Recheneinheiten, beispielsweise in separaten Computern oder Computersystemen erfolgen.
Die Sollastigmatismusverteilung-Berechnungsmittel und/oder die Brillenglas-Optimierungsmittel können mittels geeigneter Schnittstellen in einer Signalverbindung mit dem Speicher stehen und insbesondere die in dem Speicher gespeicherten Daten auslesen und/oder modifizieren. Ferner können die Sollastigmatismusverteilung-Berechnungsmittel und/oder die Brillenglas-Optimierungsmittel vorzugsweise jeweils interaktive grafische Benutzerschnittstellen (GUI) umfassen, welche es einem Benutzer ermöglichen, die Berechnung der transformierte Sollastigmatismusverteilung $Ast_{Soll_{neu}}$ und die Optimierung des progressiven Brillenglases zu visualisieren und gegebenenfalls durch Veränderung eines oder mehreren Parameter zu steuern.
Gemäß einem weiteren Aspekt wird ein Verfahren zum Herstellen eines progressiven Brillenglases vorgeschlagen, umfassend:

- Optimieren des Brillenglases nach einem bevorzugten Beispiel des Verfahrens zum Optimieren eines progressiven Brillenglases gemäß dem ersten Aspekt der Erfindung,
- Bereitstellen von Flächendaten des berechneten bzw. optimierten Brillenglases; und
- Fertigen des Brillenglases gemäß den bereitgestellten Flächendaten des Brillenglases.

Die Fertigung bzw. Bearbeitung des Brillenglases kann mittels CNC- Maschinen, mittels eines Gießverfahrens, einer Kombination der beiden Verfahren oder nach einem anderen geeigneten Verfahren erfolgen.
Ebenfalls wird eine Vorrichtung zum Herstellen eines progressiven Brillenglases bereitgestellt, umfassend:

- Optimierungsmittel, welche ausgelegt sind, ein Berechnen bzw. Optimieren des Brillenglases nach einem bevorzugten Beispiel des Verfahrens zum Optimieren eines progressiven Brillenglases durchzuführen; und
- Bearbeitungsmittel zum Fertigbearbeiten des Brillenglases.

Die Optimierungsmittel können die oben beschriebene Vorrichtung zum Optimieren eines progressiven Brillenglases sein.
Wie bereits oben ausgeführt können die Bearbeitungsmittel z.B. CNC gesteuerte Maschinen zur Direktbearbeitung eines Blanks nach den ermittelten Optimierungsvorgaben umfassen. Das fertigbearbeitete Brillenglas kann eine einfache sphärische oder rotationssymmetrisch asphärische Fläche und eine progressive Fläche aufweisen, wobei die progressive Fläche unter Berücksichtigung einer individuellen Objektanstandsfunktion und/oder einer (asymmetrischen) Sollastigmatismusverteilung sowie gegebenenfalls individueller Parameter des Brillenträgers optimiert wird. Vorzugsweise ist die sphärische oder rotationssymmetrisch asphärische Fläche die Vorderfläche (d.h. die objektseitige Fläche) des Brillenglases. Selbstverständlich ist es jedoch möglich, die nach dem berechneten Design optimierte Fläche als Vorderfläche des Brillenglases anzuordnen. Ebenfalls ist es möglich, dass beide Flächen des Brillenglases progressive Flächen sind. Des Weiteren ist es möglich, beide Flächen des Brillenglases zu optimieren.

Die Vorrichtung zum Herstellen eines progressiven Brillenglases kann ferner Erfassungsmittel zum

Erfassen der Verordnungswerte des Brillenglases; und

Erfassen der (individuellen) Parameter des Brillenglases und/oder der Anordnung des Brillenglases vor den Augen des Brillenträgers

umfassen.

Alternativ oder zusätzlich kann die Vorrichtung zum Herstellen eines progressiven Brillenglases ferner Erfassungsmittel zum Erfassen von Objektentfernungsdaten umfassen. Die Erfassungsmittel können insbesondere grafische Benutzerschnittstellen umfassen.

Ferner wird ein progressives Brillenglas, welches nach einem bevorzugten Herstellungsverfahren hergestellt ist, vorgeschlagen, sowie eine Verwendung des nach einem bevorzugten Herstellungsverfahren hergestellten progressiven Brillenglases in einer vorgegebenen durchschnittlichen oder individuellen Gebrauchsstellung des Brillenglases vor den Augen eines bestimmten Brillenträgers zur Korrektur einer Fehlsichtigkeit des Brillenträgers.

Mit der vorgeschlagenen Vorgehensweise zur Abänderung der Objektabstandsfunktion gemäß einem der bevorzugten Beispiele ist es möglich, eine vorgegebene Start-Objektabstandsfunktion, welche z.B. einem Standard-Objektabstandmodell entspricht, schnell und mit einem vergleichsweise geringen Rechenaufwand an einem, von dem Standard-Objektabstandsmodell abweichenden Modell für die Objektentfernungen (Objektabstände) anzupassen. Es ist ferner möglich, die Charakteristika der Start-Objektabstandsfunktion gezielt zu ändern, und so Objektabstandsfunktion für unterschiedliche Brillenglasdesigns zu erzeugen.

Weiteren Aufgaben, Merkmale und Vorteile der vorliegenden Erfindung gehen aus der nachfolgenden, detaillierten Beschreibung beispielhafter und bevorzugter Ausführungsformen der vorliegenden Erfindung mit Bezug auf die Zeichnungen hervor, in welchen zeigt:

Fig. 1        Start-Sollastigmatismusverteilung für eine Addition von 2,5 dpt;

Fig. 2        Sollastigmatismusverteilung für eine Addition von 2,5 dpt mit einer Skalierung des temporalen Astigmatismus;

Fig. 3        die in Fig. 2 gezeigte skalierte Sollastigmatismusverteilung, welche zusätzlich in Abhängigkeit von der Addition skaliert ist;

Fig.4        die in Abhängigkeit von der Addition skalierte Start-Sollastigmatismusverteilung;

Fig. 5        einen Abschnitt einer graphischen Benutzerschnittstelle zum Festlegen des Vorfaktors v;

Fig. 6A        ein Beispiel einer Start-Sollastigmatismusverteilung;

Fig. 6B        ein Beispiel einer abgeänderten/transformierten Sollastigmatismusverteilung, welche aus der in Fig. 6A gezeigten Start-Sollastigmatismusverteilung berechnet wurde;

Fig. 7A        den Flächenbrechwert der progressiven Fläche eines progressiven Brillenglases, welches nach der in Fig. 6A gezeigten Start-Sollastigmatismusverteilung optimiert worden ist;

Fig. 7B        den Flächenbrechwert der progressiven Fläche eines progressiven Brillenglases, welches nach der in Fig. 6B gezeigten transformierten Sollastigmatismusverteilung optimiert worden ist;

Fig. 8A        den Gradient des Flächenbrechwerts der progressiven Fläche des progressiven Brillenglases, welches nach der in Fig. 6A gezeigten Start-Sollastigmatismusverteilung optimiert worden ist;

Fig. 8B        den Gradient des Flächenbrechwerts der progressiven Fläche des progressiven Brillenglases, welches nach der in Fig. 6B gezeigten transformierten Sollastigmatismusverteilung optimiert worden ist;

Fig. 9A        den Flächenastigmatismus der progressiven Fläche des progressiven Brillenglases, welches nach der in Fig. 6A gezeigten Start-Sollastigmatismusverteilung optimiert worden ist;

Fig. 9B        den Flächenastigmatismus der progressiven Fläche des progressiven Brillenglases, welches nach der in Fig. 6B gezeigten transformierten Sollastigmatismusverteilung optimiert worden ist;

Fig. 10A        den Gradient des Flächenastigmatismus der progressiven Fläche des progressiven Brillenglases, welches nach der in Fig. 6A gezeigten Start-Sollastigmatismusverteilung optimiert worden ist;

Fig. 10B        den Gradient des Flächenastigmatismus der progressiven Fläche des progressiven Brillenglases, welches nach der in Fig. 6B gezeigten transformierten Sollastigmatismusverteilung optimiert worden ist;

Fig. 11A        den Astigmatismus in Gebrauchstellung des progressiven Brillenglases, welches nach der in Fig. 6A gezeigten Start-Sollastigmatismusverteilung optimiert worden ist;

Fig. 11B        den Astigmatismus in Gebrauchstellung des progressiven Brillenglases, welches nach der in Fig. 6B gezeigten transformierten Sollastigmatismusverteilung optimiert worden ist;

Fig. 12A        den mittleren Brechwert in Gebrauchstellung des progressiven Brillenglases, welches nach der in Fig. 6A gezeigten Start-Sollastigmatismusverteilung optimiert worden ist;

Fig. 12B den mittleren Brechwert in Gebrauchstellung des progressiven Brillenglases welches nach der in Fig. 6B gezeigten transformierten Sollastigmatismusverteilung optimiert worden ist;

Fig.13A,B die Abbildung von Objekten in unterschiedlichen Objektentfernungen durch ein Brillenglas;

Fig.14A,B den reziproken Objektanstand (in dpt) entlang der Hauptblicklinie gemäß einem Beispiel;

Fig. 15A - 15H ein Beispiel einer Anpassung einer Start-Objektabstandsfunktion an ein geändertes Objektabstandsmodell, wobei

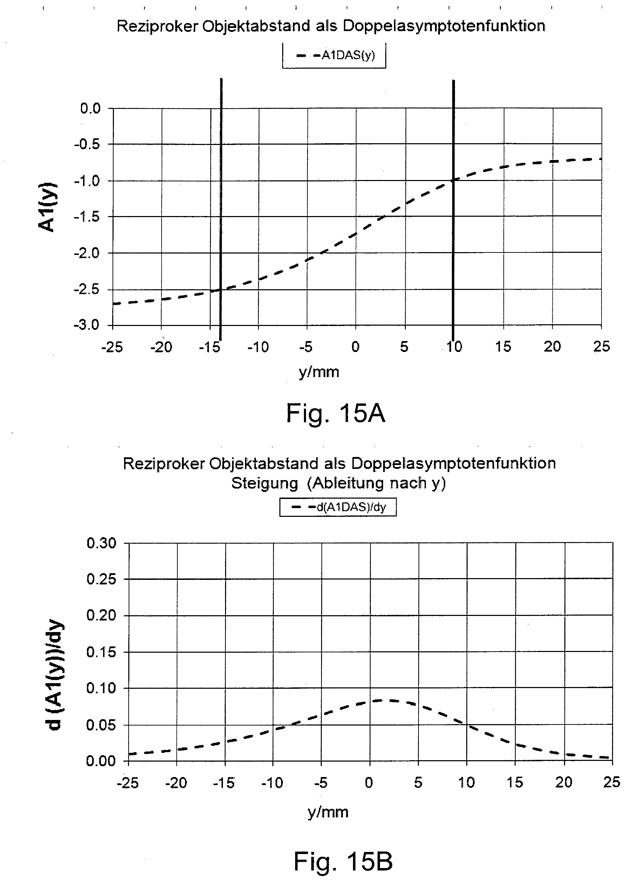

Fig. 15A eine weitere beispielhafte Start-Objektanstandsfunktion;

Fig. 15B die Steigung der Start-Objektanstandsfunktion;

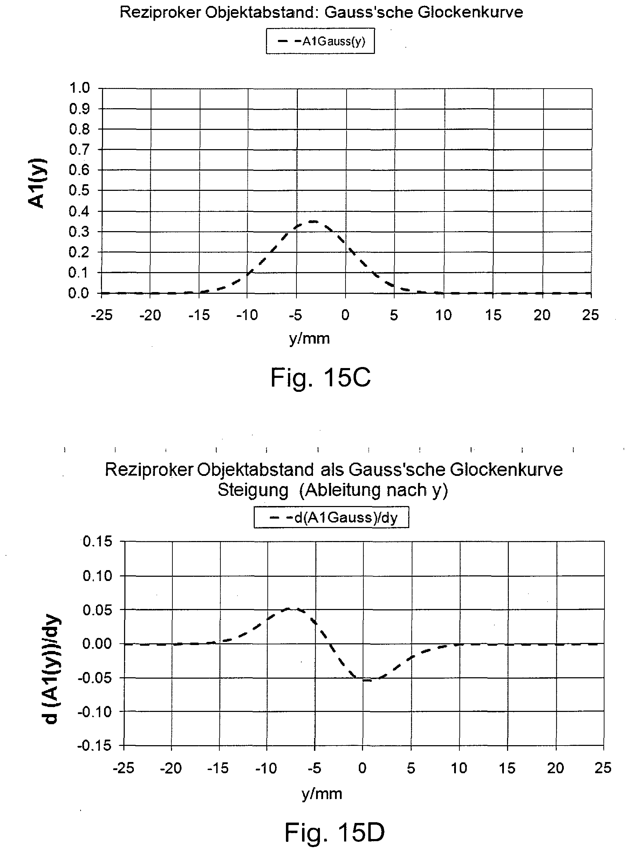

Fig. 15C eine beispielhafte Gauss'sche Funktion;

Fig. 15D die Steigung der Gauss'schen Funktion;

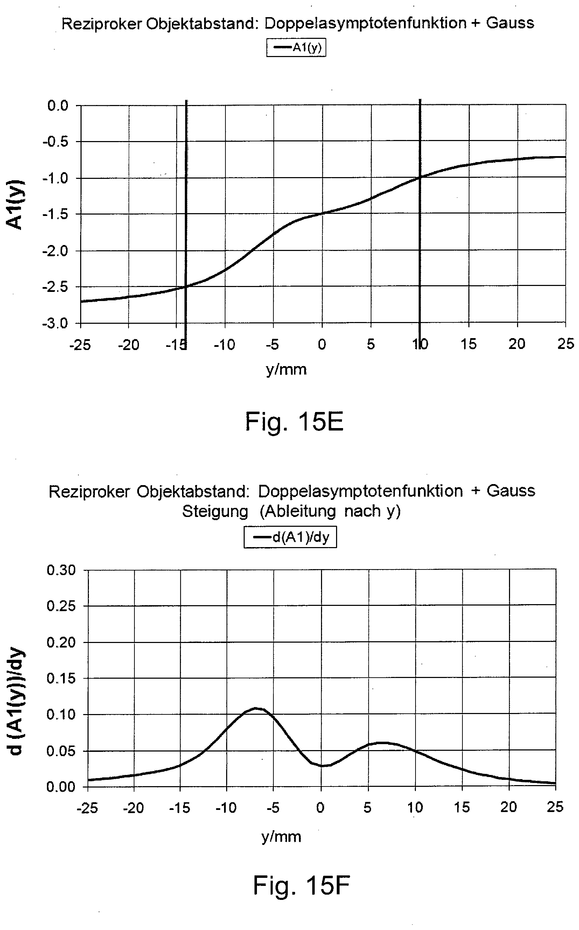

Fig. 15E die durch eine Überlagerung der Start-Objektabstandsfunktion mit der Gauss'schen Funktion erhaltene Objektabstandsfunktion;

Fig. 15F die Steigung der Objektabstandsfunktion;

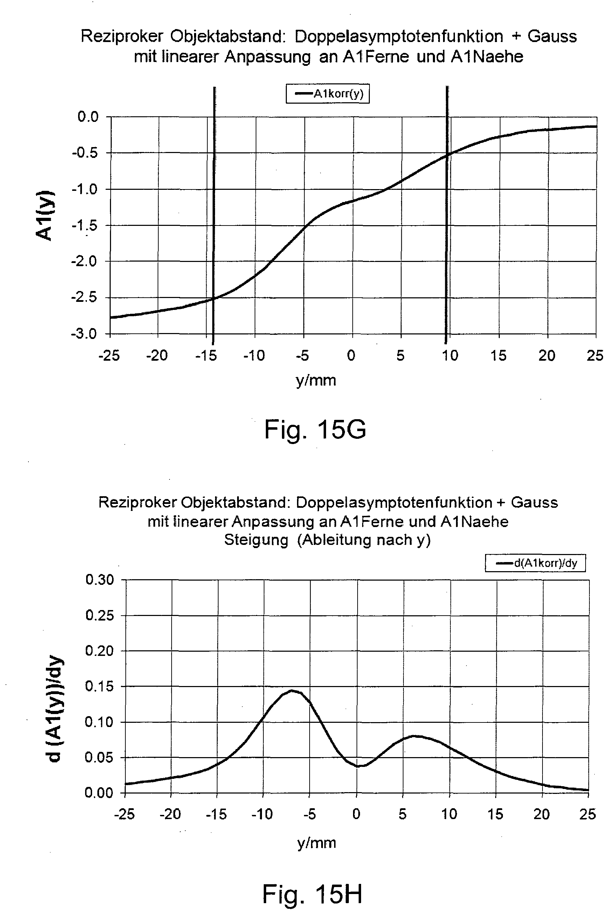

Fig. 15G die durch eine lineare Anpassung abgeänderte Objektabstandsfunktion; und

Fig. 15H die Steigung der durch eine lineare Anpassung abgeänderten Objektabstandsfunktion ist;

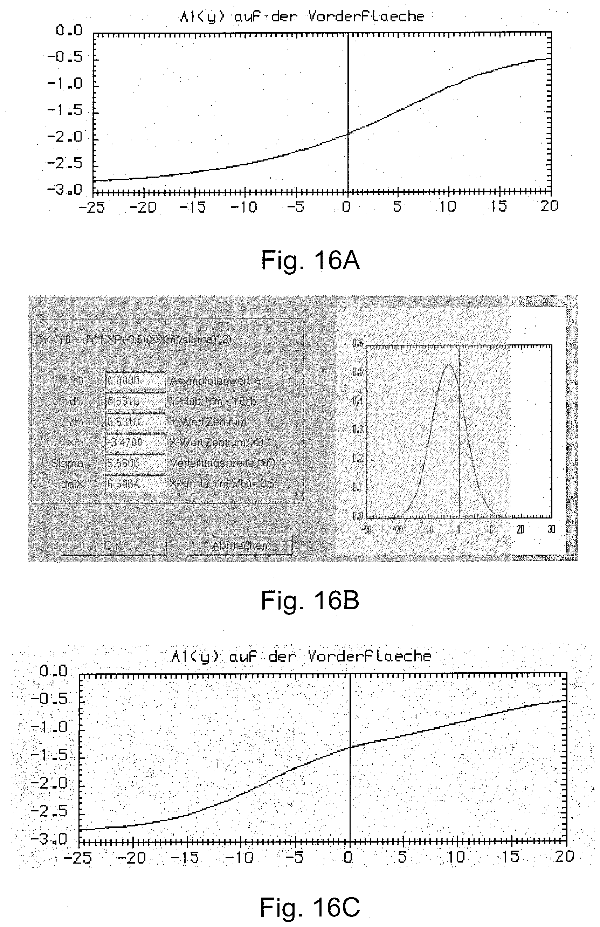

Fig. 16A -16C ein Beispiel einer graphischen Benutzerschnittstelle zur Visualisierung und Änderung der Objektabstandsfunktion, wobei

Fig. 16A einen Abschnitt zur Visualisierung einer Start-Objektabstandsfunktion;

Fig. 16B einen Abschnitt zur Visualisierung und Änderung der Parameter einer Korrekturfunktion;

Fig. 16C einen Abschnitt zur Visualisierung der abgeänderten Start-Objektabstandsfunktion ist;

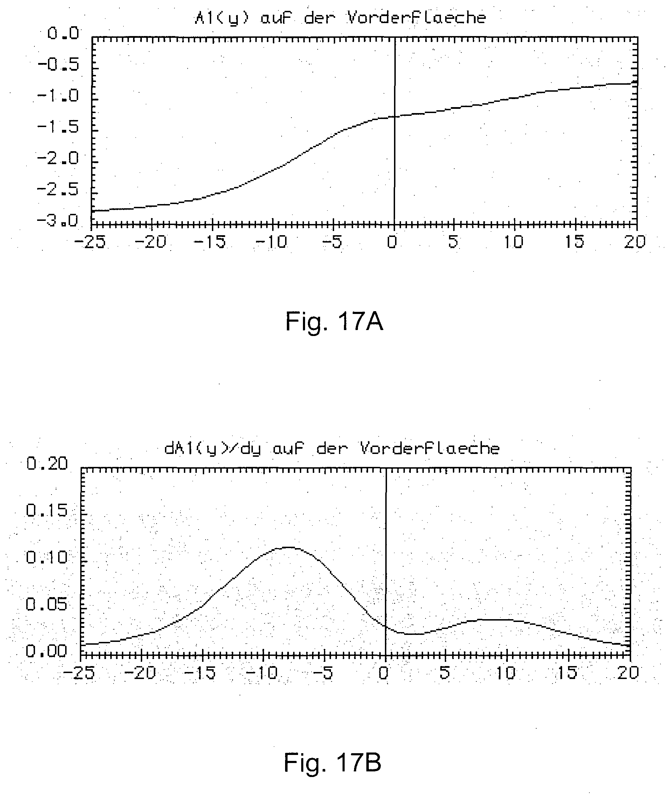

Fig. 17A-17C ein weiteres Beispiel einer Anpassung einer Start-Objektabstandsfunktion an ein geänderten Objektabstandsmodell, wobei

Fig. 17A eine weitere beispielhafte Start-Objektanstandsfunktion;

Fig. 17B die Steigung der Start-Objektanstandsfunktion;

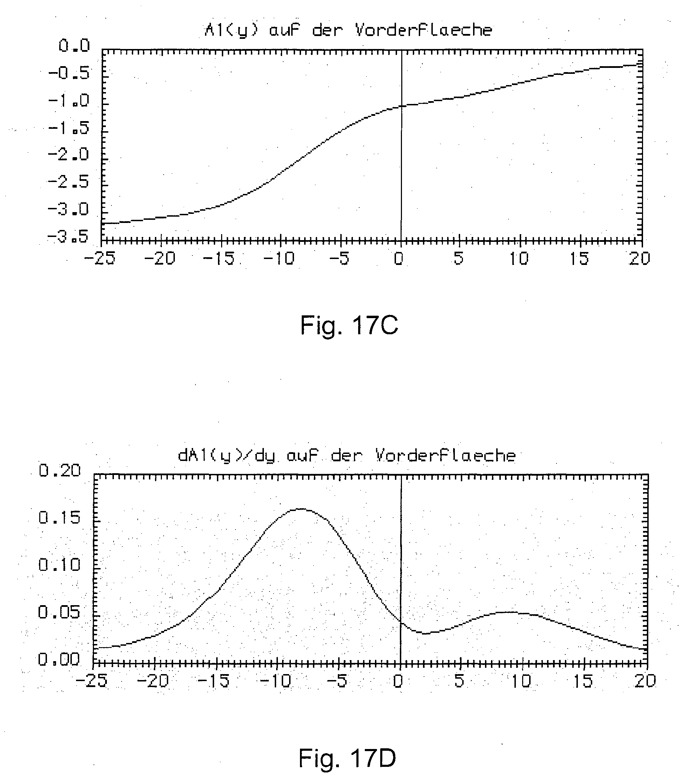

Fig. 17C die durch eine lineare Anpassung erhaltene neue Objektabstandsfunktion;

Fig. 17D die Steigung der neuen Objektabstandsfunktion ist;

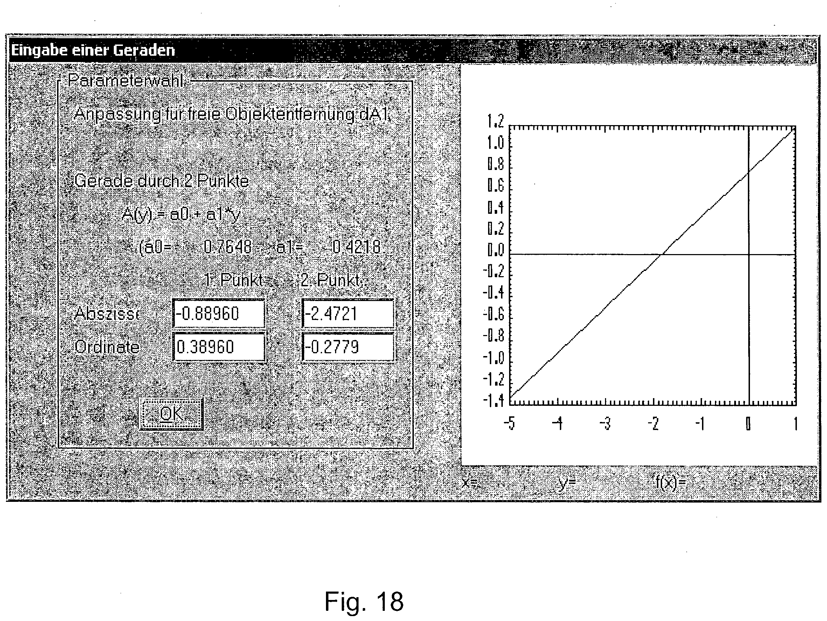

Fig. 18 eine beispielhafte graphische Benutzerschnittstelle zur Visualisierung und Änderung der Objektabstandsfunktion;

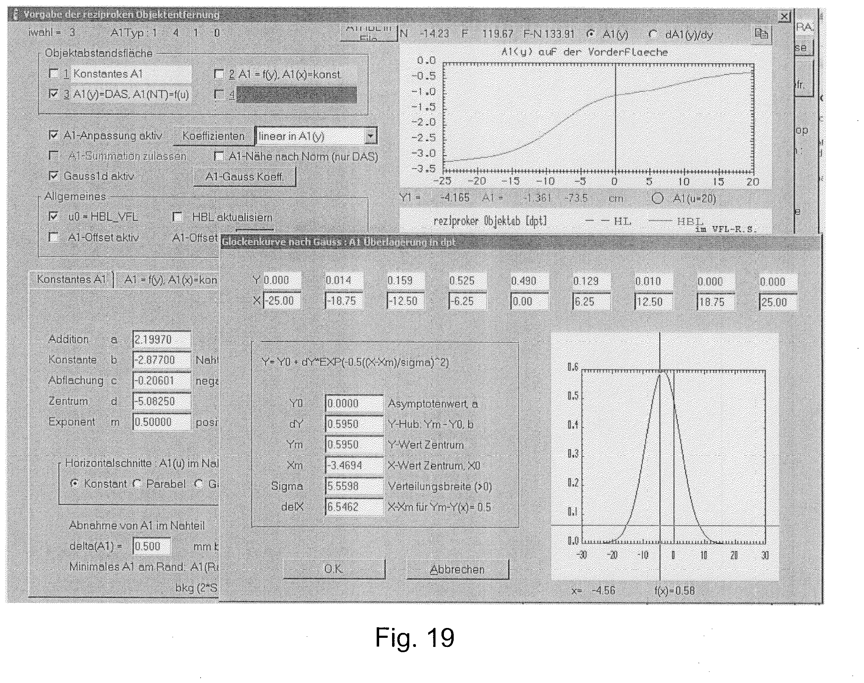

Fig.19 eine weitere beispielhafte graphische Benutzerschnittstelle zur Visualisierung und Änderung der Objektabstandsfunktion.

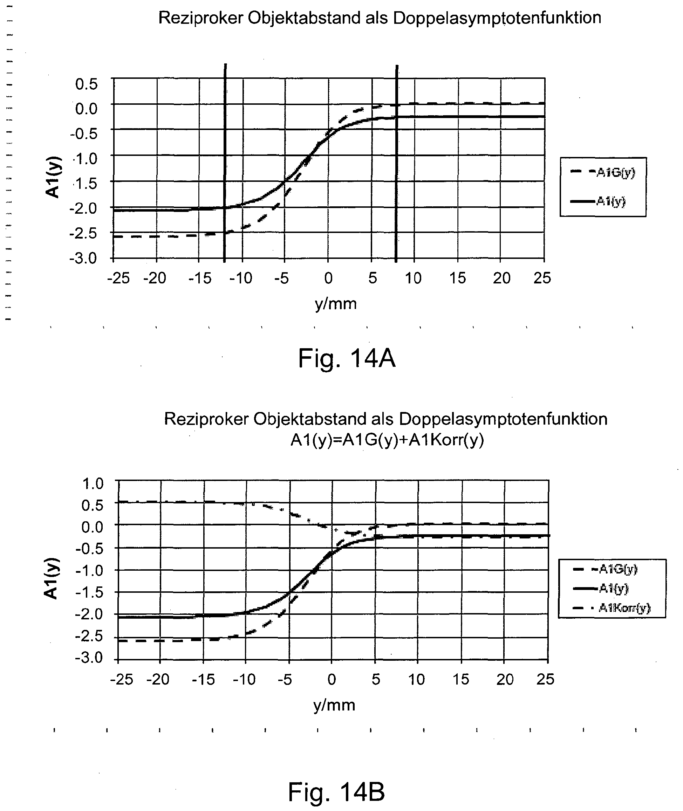

Auf der Abszisse der Figuren 14A bis 17D ist die vertikale Koordinate $y$ der Hauptblicklinie in mm aufgetragen. Auf der Ordinate der Figuren 14 bis 17 ist der reziproke Objektabstand (reziproke Objektentfernung) in dpt aufgetragen. Das Koordinatensystem ist das oben beschriebene Koordinatensystem $\{u,y\}$.

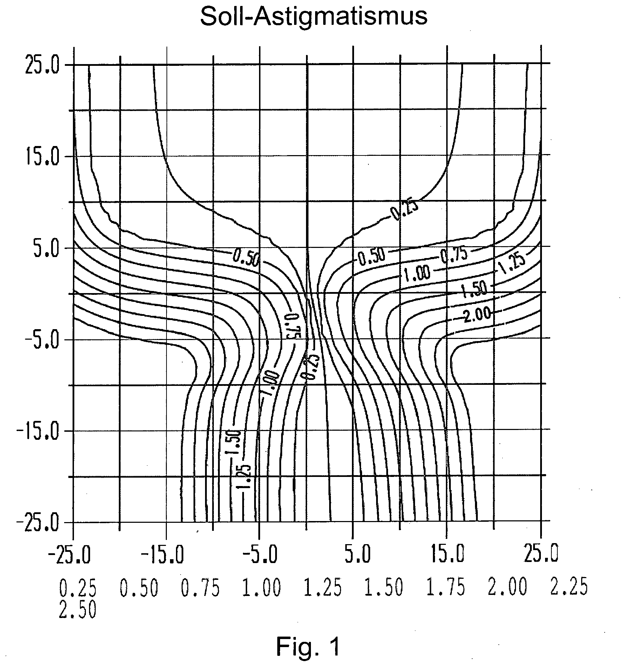

**Fig. 1** zeigt die Start-Sollastigmatismusverteilung ausgehend von einer vorgegebenen Startfläche für eine Addition von 2,5 dpt. Der maximale Astigmatismus für die Peripherie beträgt 2,6 dpt. Ausgehend von der Start-Sollastigmatismusverteilung soll ein Brillenglas mit den folgenden Verordnungswerten und Parametern: Sphäre (Sph) = -5,0 dpt; Zylinder (Zyl) = 0,0 dpt; Addition (Add) = 2,5 dpt; Basiskurve (BK) = 3,0 dpt; Brechungsindex n = 1,579 berechnet werden. Das Brillenglas wird in einer Gebrauchsstellung mit den Parametern: Hornhautscheitelabstand (HSA) = 13 mm; Vorneigung (VN) = 7°; Pupillendistanz (PD) = 64 mm; Y-Verkippunktswinkel = 0° berechnet.

In einem Beispiel wird in Abhängigkeit von den Verordnungsdaten des Brillenglases (insbesondere des Verordnungsastigmatismus, der verordneten Achse des Verordnungsastigmatismus und der verordneten Addition) und des Verkippungswinkels des Brillenglases ein Faktor $k$ = 0,58 ermittelt (vgl. Gleichungen (7) bis (13)). Der Faktor $k$ = 0,58 wird mit dem maximalen temporalen Astigmatismus der Start-Sollastigmatismusverteilung multipliziert. Anschließend wird eine Interpolation der Sollastigmatismuswerte zwischen der 0,5 dpt Basis-Sollisoastigmatismuslinie und der Peripherie des Brillenglases unter Berücksichtigung des mit dem Faktor $k$ multiplizierten maximalen temporalen Astigmatismus durchgeführt. Die Interpolation erfolgt nach dem in DE 10 2009 005 206 oder DE 10 2009 005 214 beschrieben Kegelstumpfmodell für den peripheren Sollastigmatismus.

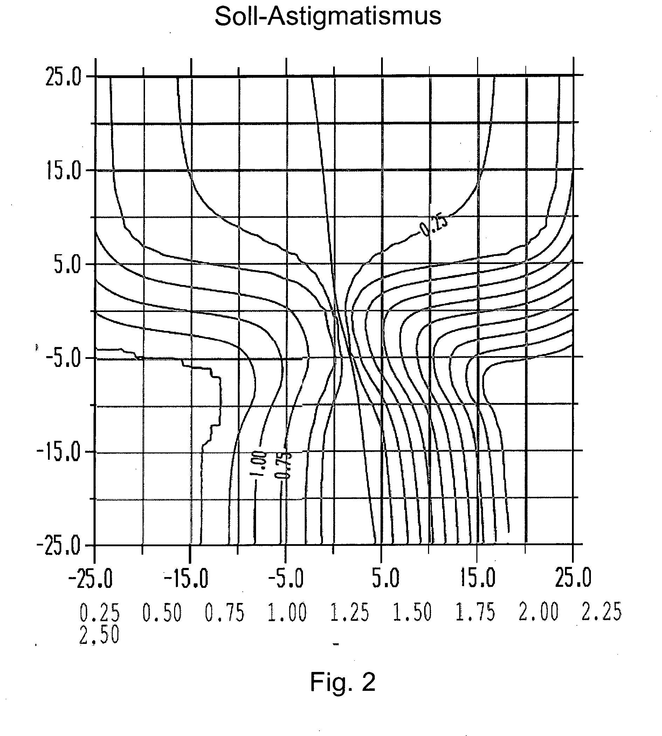

In diesem Beispiel hat die Multiplikation des maximalen temporalen Astigmatismus mit dem Faktor $k$ keinen Einfluss auf die 0,5 dpt Basis-Sollisoastigmatismuslinie. Die Sollastigmatismuswerte zwischen der Hauptlinie und der 0,5 dpt Basis-Sollisoastigmatismuslinie bleiben somit unverändert. Zwischen der temporalen 0,5 dpt Basis-Sollisoastigmatismuslinie und der Spitze des temporalen Astigmatismushügels (d.h. die Position des maximalen Sollastigmatismus) wird jedoch eine Interpolation anhand des skalierten maximalen temporalen Astigmatismus (in diesem Fall 2,6 * 0,58 = 1,508 dpt) durchgeführt. **Fig. 2** zeigt die Sollastigmatismusverteilung, welche nach einer Multiplikation des maximalen temporalen Astigmatismus und einer anschließenden Interpolation erhalten wird. Die in Fig. 2 gezeigte asymmetrische Sollastigmatismusverteilung gilt für ein progressives Brillenglas mit einer Addition von 2,5 dpt.

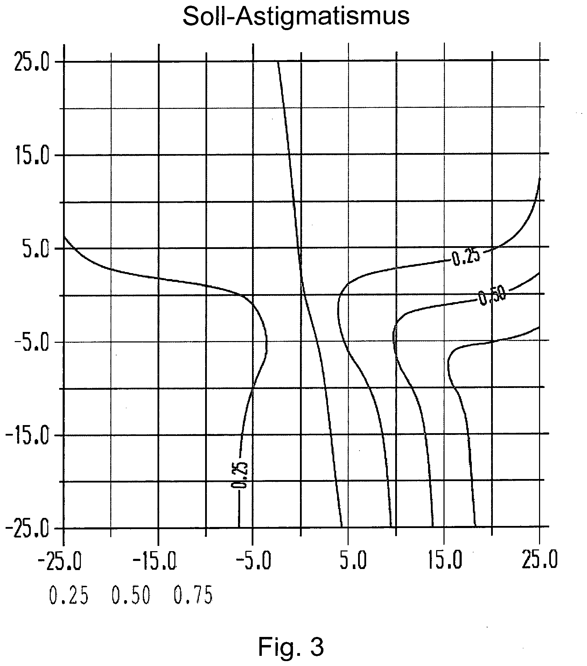

Wie in der DE 10 2008 015 189 beschrieben, könnte dann die durch eine Multiplikation des maximalen temporalen Sollastigmatismus mit anschließender Interpolation der Sollastigmatismuswerte entstandene Gesamtastigmatismusvorgabe in Abhängigkeit von der Addition als Ganzes skaliert werden, um Sollastigmatismusvorgaben für eine andere Addition zu erhalten. So kann z.B. die in Fig. 2 gezeigte Sollastigmatismusverteilung als Ganzes mit dem Faktor 0,3 skaliert werden, um von der ursprünglichen Addition von 2,5 dpt zu einer neuen Addition von 0,75 zu kommen. Dadurch ergibt sich ein temporaler maximaler Astigmatismus von 1.508*0.3 = 0.45. Die zusätzlich in Abhängigkeit von der Addition skalierte Sollastigmatismusverteilung ist in **Fig. 3** gezeigt.

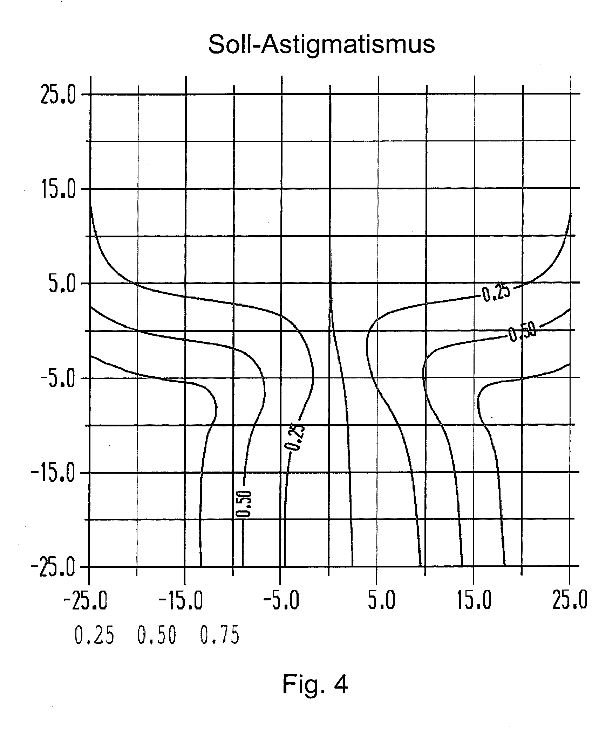

**Fig. 4** zeigt ein Vergleichsbeispiel einer Sollastigmatismusverteilung, welche aus der in Fig. 1 gezeigten Sollastigmatismusverteilung mittels einer (globalen) Skalierung in Abhängigkeit von der Addition (wie in DE 10 2008 015 189 beschrieben) erhalten wird. Das in Fig. 4 gezeigte Beispiel entspricht einer Umskalierung der Start-Sollastigmatismusverteilung von der ursprünglichen Addition von 2,5 dpt auf eine neue Addition von 0,75 dpt.

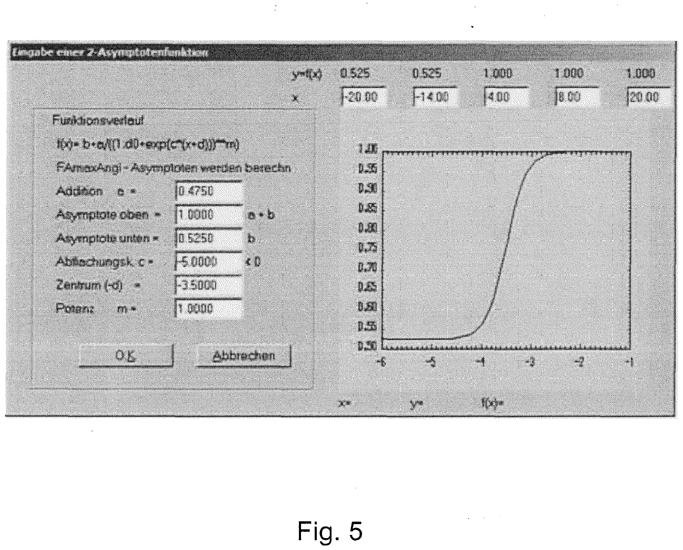

**Fig. 5** zeigt einen Abschnitt einer graphischen Benutzerschnittstelle, welche es ermöglicht, den Vorfaktor $v$ festzulegen. Wie oben beschrieben kann der asymptotische Vorfaktor $v$ z.B. in Abhängigkeit von der mittleren Fernwirkung durch eine Doppelasymptotenfunktion (vgl. Gleichung 7) mit den Parametern $a = 0,475$; $b = 0,525$; $c = -5,0$; $d = 3,5$ und $m = 1$ vorgegeben werden.

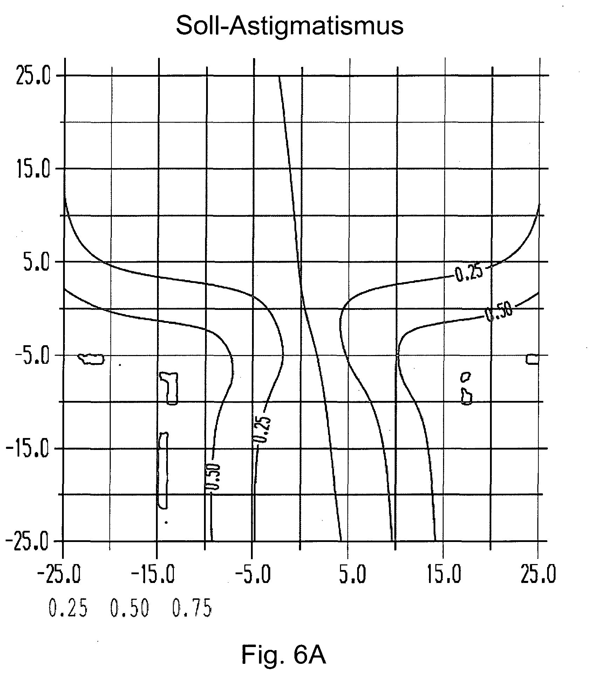

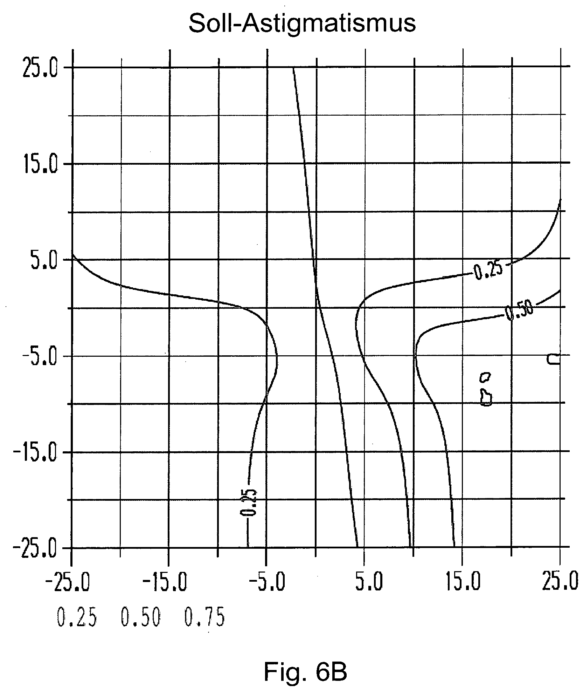

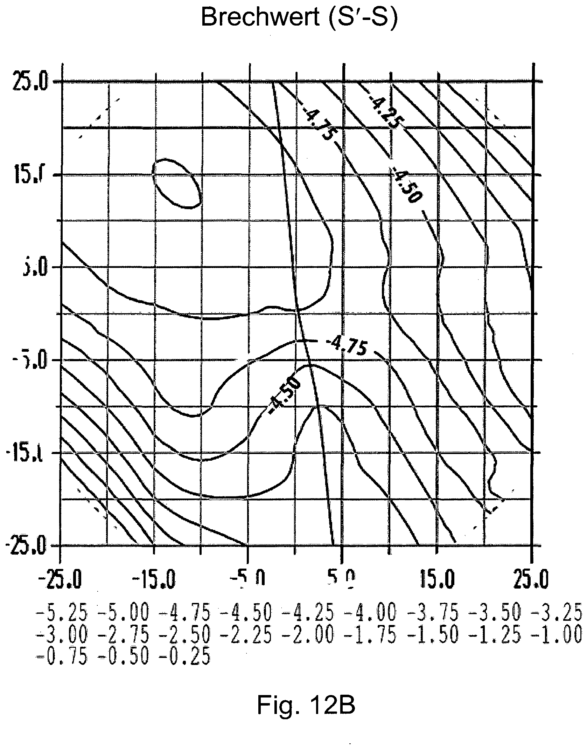

**Figuren 6A, B bis 12A, B** zeigen die Veränderung der Sollvorgaben bei einer beispielhaften Transformation der temporalen Sollastigmatismusverteilung (Fig. 6A und 6B) sowie die Veränderung der Ergebnisse der Optimierung eines progressiven Brillenglases nach den jeweiligen Sollastigmatismusvorgaben. Die Parameter der Verordnung sind:

- Sphäre (Sph) = -8 dpt;
- Zylinder (Cyl) = 6 dpt;
- Achse 45°;
- Addition 0,75 dpt.

Der Verkippungswinkel, welcher bei flachen Basiskurven näherungsweise dem Fassungsscheibenwinkel entspricht, beträgt 5°.

Nach den oben beschriebenen Formeln (7) bis (14) ergibt sich ein Faktor $k$ mit einem Wert von 0,58.

**Fig. X-A** (X = 6, 7, ...12) beziehen sich auf ein Vergleichsbeispiel mit einer symmetrischen Sollastigmatismusverteilung ("Start-Sollastigmatismusverteilung"). **Fig. X-B** (X = 6, 7, ..., 12) beziehen sich auf ein Beispiel ("Manipulierte Sollvorgaben) mit einer nicht symmetrischen Sollastigmatismusverteilung.

Die in **Fig. 6B** gezeigte Sollastigmatismusverteilung ist aus der in **Fig. 6A** gezeigten symmetrischen Sollastigmatismusverteilung durch eine Multiplikation des temporalen Sollastigmatismus mit dem Faktor k= 0,58 und einer anschließenden Interpolation der Sollastigmatismuswerte erzeugt worden. Die Interpolation erfolgt nach dem in DE 10 2009 005 206 oder DE 10 2009 005 214 offenbarten Kegelstumpfmodel für den peripheren Astigmatismus. Der nasale Sollastigmatismus ist von dieser Änderung nicht betroffen. Folglich ist der maximale temporale Sollastigmatismus um den Faktor 0,58 geringer als der maximale nasale Sollastigmatismus.

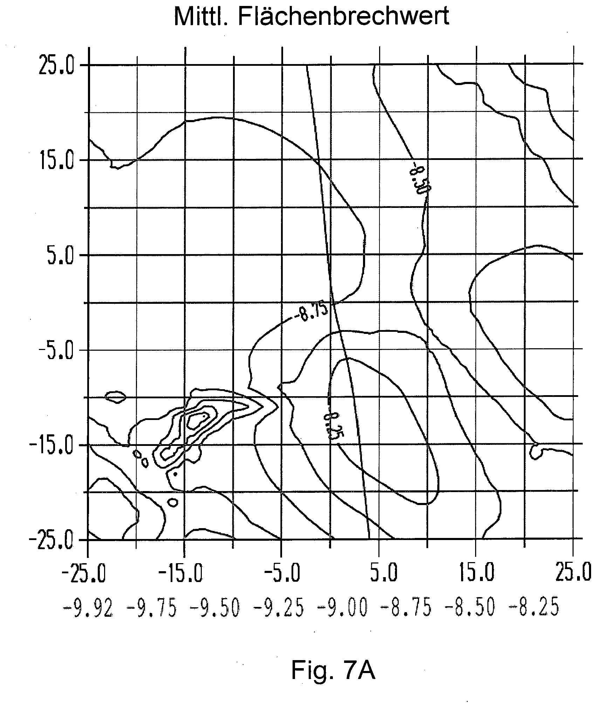

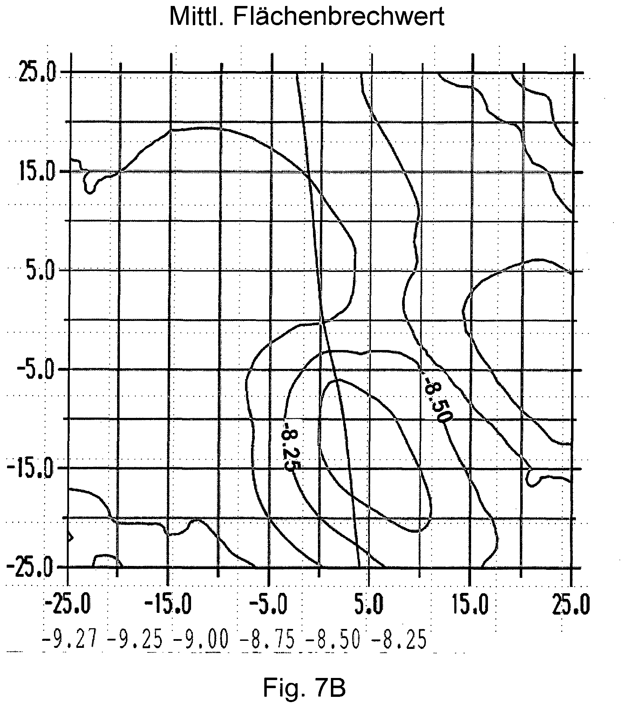

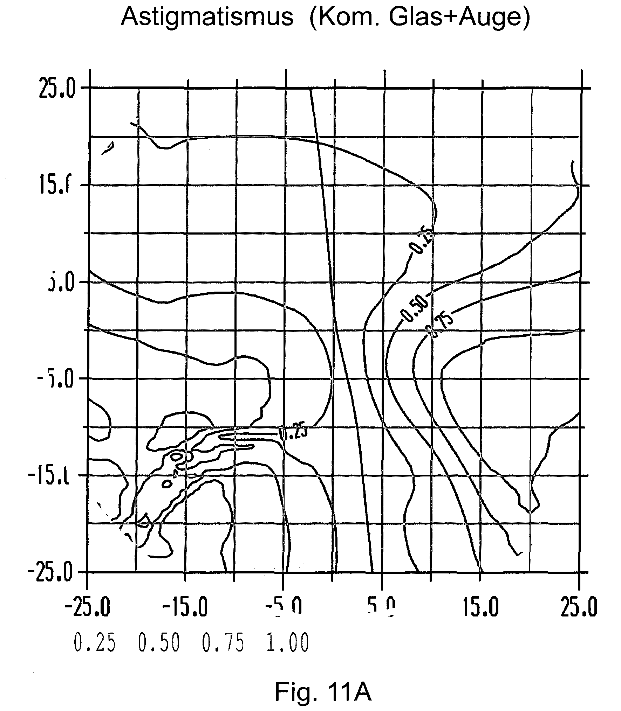

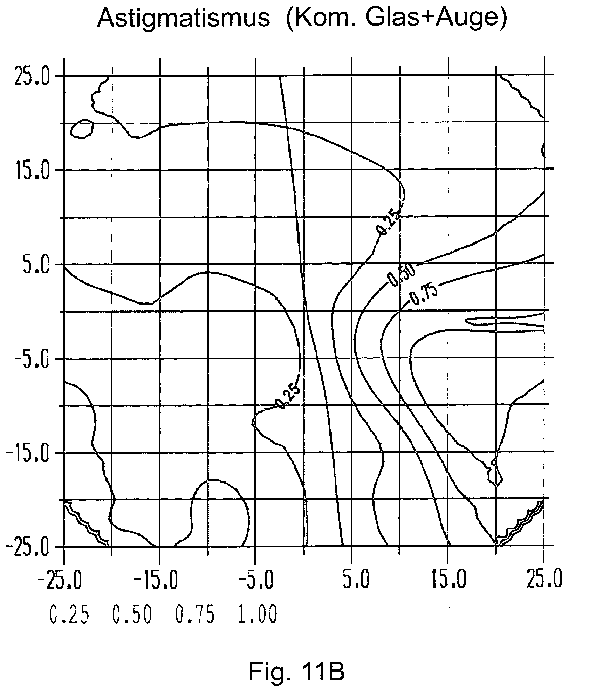

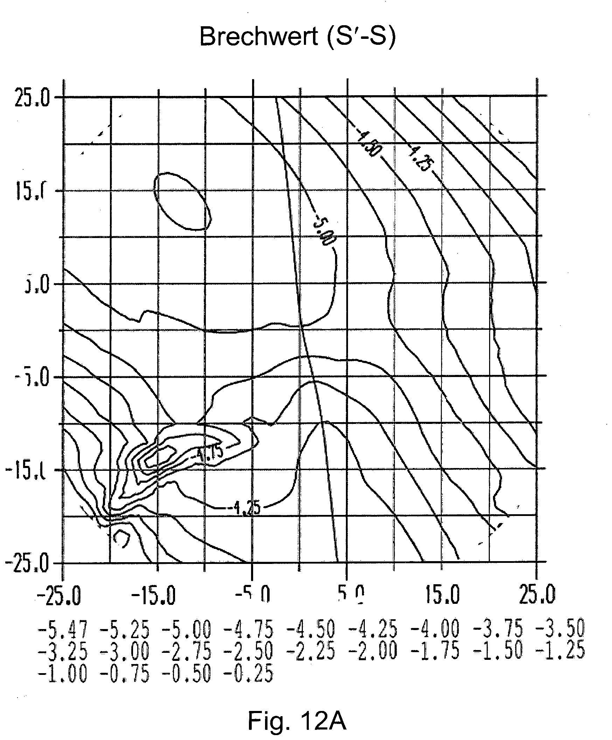

**Fig. 7A bis 10A** zeigen die Flächeneigenschaften der progressiven Fläche eines Brillenglases, welches nach den in Fig. 6A gezeigten symmetrischen Sollastigmatismusvorgaben optimiert worden ist. **Fig. 7B bis 10B** zeigen die Flächeneigenschaften der progressiven Fläche eines Brillenglases, welches nach den in Fig. 6B gezeigten asymmetrischen, manipulierten Sollvorgaben optimiert worden ist. Fig. 11A, B und 12A, B zeigen jeweils den Astigmatismus (Fig. 11A, B) und den Brechwert (Fig. 12A, B) in Gebrauchsstellung des jeweiligen progressiven Brillenglases. Die nachfolgende **Tabelle 1** fasst die in den Figuren 6A, B bis 12A, B gezeigten Sollvorgaben und Eigenschaften einer nach den jeweiligen Sollvorgaben optimierten progressiven Fläche zusammen.

**Tabelle 1**

| Gezeigte Eigenschaft | Symmetrische Sollvorgaben | Manipulierte Sollvorgaben |
|---|---|---|
| Sollastigmatismus [dpt] | Fig. 6A | Fig. 6B |
| Flächenbrechwert der progressiven Fläche [dpt] | Fig. 7A | Fig. 7B |
| Flächenbrechwertgradient der progressiven Fläche [dpt/mm] | Fig. 8A | Fig. 8B |
| Flächenastigmatismus der progressiven Fläche [dpt] | Fig. 9A | Fig. 9B |
| Flächenastigmatismusgradient der progressiven Fläche [dpt/mm] | Fig. 10A | Fig. 10B |

(fortgesetzt)

| Gezeigte Eigenschaft | Symmetrische Sollvorgaben | Manipulierte Sollvorgaben |
| --- | --- | --- |
| Gebrauchsstellungsastigmatismus [dpt] | Fig. 11A | Fig. 11B |
| Mittlerer Brechwert in Gebrauchsstellung [dpt] | Fig. 12A | Fig. 12B |

Bei einem Vergleich der Figuren 6A und 6B ist die Asymmetrie der in Fig. 6B gezeigten manipulierten Sollastigmatismusverteilung deutlich zu erkennen. In Fig. 6B ist der temporale Sollastigmatismus unter 0,5 dpt.

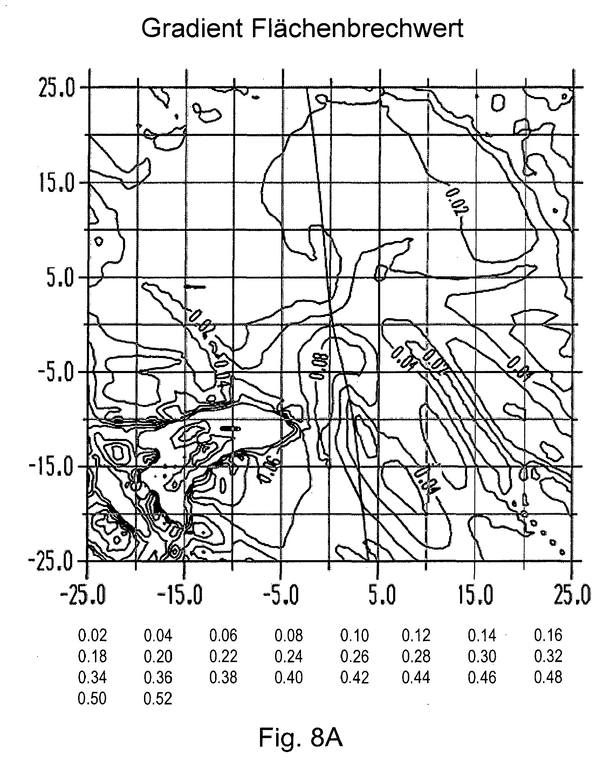

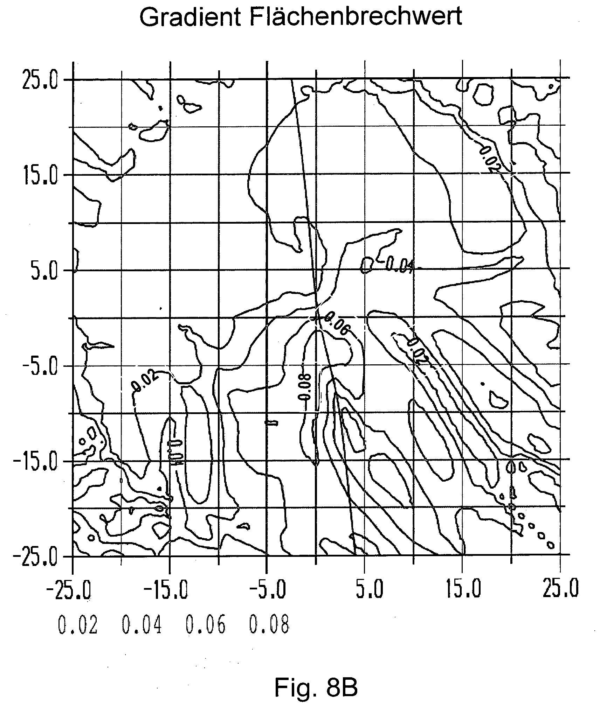

Die progressive Fläche des Brillenglases, welches gemäß den in Fig. 6B gezeigten manipulierten Sollvorgaben optimiert worden ist, weist temporal deutlich geringere Flächenbrechwertänderungen auf (siehe auch Fig. 8A und Fig. 8B). So ist bei einem Vergleich der in Fig. 8A und Fig. 8B gezeigten Gradienten des Flächenbrechwerts der progressiven Fläche deutlich zu erkennen, dass die gemäß den manipulierten Sollastigmatismusvorgaben optimierte progressive Fläche temporal an derselben Stelle wesentlich geringere Gradienten aufweist als die gemäß den symmetrischen Sollastigmatismusvorgaben optimierte Fläche. Die Gradienten sind in diesem Beispiel um einen Faktor 5 geringer.

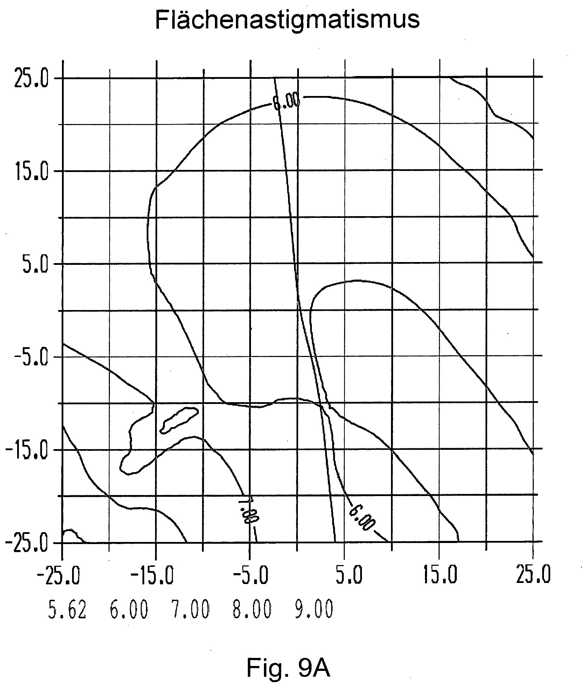

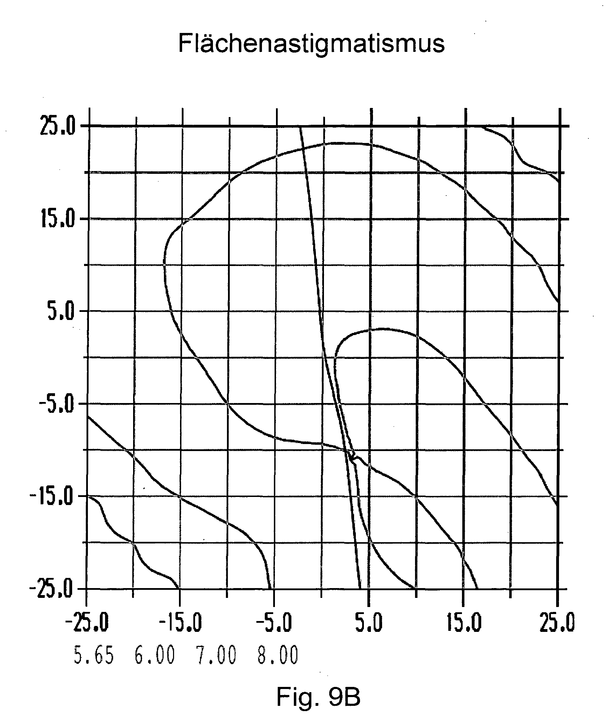

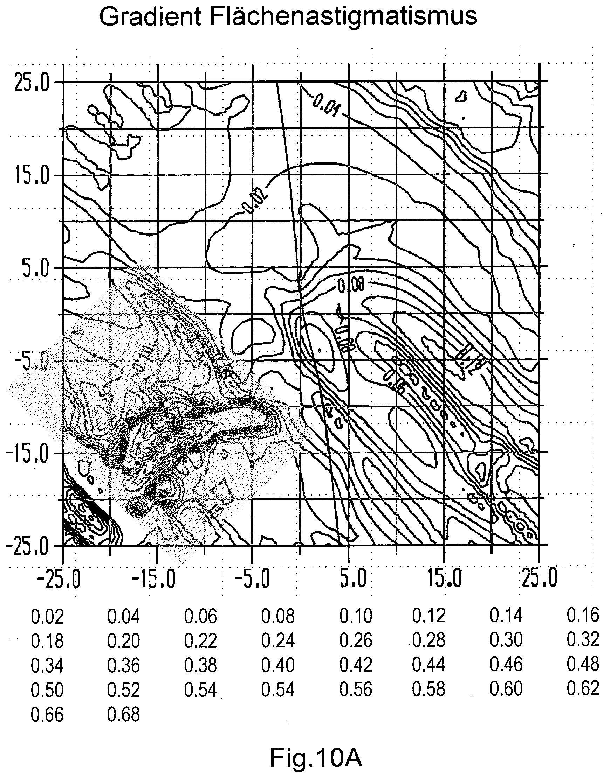

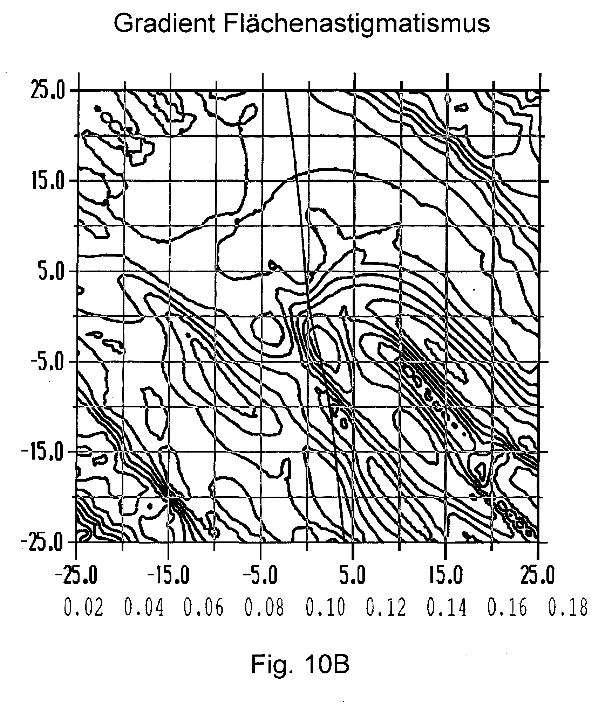

Ferner ist bei einem Vergleich der Figuren 9A und 9B mit den Figuren 10A und 10B zu erkennen, dass die gemäß den manipulierten Sollastigmatismusvorgaben optimierte progressive Fläche temporal deutlich geringere Änderungen des Flächenastigmatismus und somit deutlich geringere Gradienten des Flächenastigmatismus aufweist als die gemäß den symmetrischen Sollastigmatismusvorgaben optimierte Fläche. Die Gradienten sind in diesem Beispiel um einen Faktor 4,5 geringer.

Ebenfalls sind die Gebrauchsstellungseigenschaften (Astigmatismus und Brechwert in Gebrauchsstellung) des gemäß den manipulierten Sollastigmatismusvorgaben optimierten Brillenglases deutlich gradientenärmer, wobei sich die zentralen Sehbereiche nicht wesentlich in ihrer Größe und Nutzbarkeit unterscheiden. In dem konkreten Beispiel ändern sich die Gradienten von 0,45 dpt/mm zu 0,05 dpt/mm. Bei dem mittleren Brechwert in Gebrauchsstellung wird eine Reduktion von 0,55 dpt/mm (vgl. Fig. 12A) auf 0,15 dpt/mm (vgl. Fig. 12B) erzielt werden.

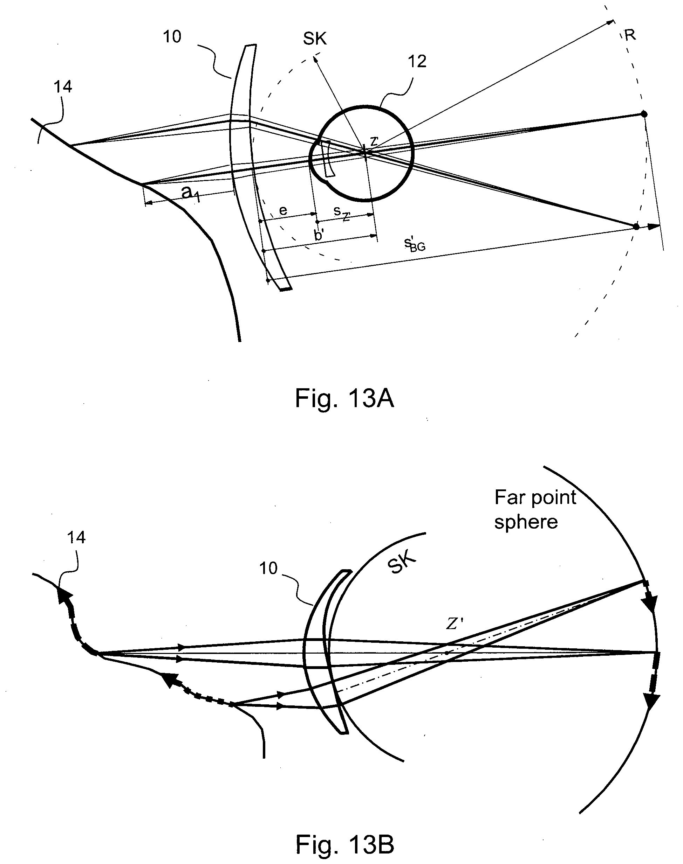

Figuren **13A und 13B** zeigen schematisch die Abbildung von Objekten in unterschiedlichen Objektentfernungen (Objektabständen) durch ein Brillenglas 10. Das Brillenglas 10 ist in einer vorgegebenen Gebrauchsstellung vor den Augen 12 des Brillenträgers angeordnet. In Fig. 13A und 13B bezeichnen:

$a1= 1/A_1$     die Objektentfernung (den Objektabstand);
e den     Hornhautscheitelabstand (HSA);
b'     den Augendrehpunktabstand;
$s_{Z'}$     den Abstand Hornhautscheitel - Augendrehpunkt;
$s'_{BG}$     die Bildentfernung;
Z'     den Augendrehpunkt;
R     die Fernpunktkugel; und
SK     die Scheitelpunktkugel.

Die Berechnung bzw. Optimierung des Brillenglases 10 erfolgt komplett in der Gebrauchsstellung des Brillenglases 12, d.h. unter Berücksichtung der vorgegebenen Anordnung des Brillenglases vor den Augen 12 des Brillenträgers (definiert durch den Hornhautscheitelabstand, Vorneigung, etc.) und eines vorgegebenen Objektabstandmodells. Das Objektabstandsmodell kann die Vorgabe einer Objektfläche 14 umfassen, welche verschiedene Objektabstände oder Objektbereiche für foveales Sehen festlegt. Die Objektfläche 14 wird vorzugsweise durch die Vorgabe der reziproken Objektentfernung (des reziproken Objektabstands) $A_1(x,y)$ entlang der objektseitigen Hauptstrahlen definiert. Der Verlauf der reziproken Objektentfernung $A_1(x=x_0, y)=A_1(u=0, y)$ entlang der Hauptblicklinie (d.h. bei $x=x_0$ bzw. $u=0$) stellt die Objektabstandsfunktion dar. Die Objektabstandsfunktion $A_1(x=x_0, y)=A_1(u=0,y)$ bestimmt die Breite der Sehbereiche in der Umgebung der Hauptblicklinie (Satz von Minkwitz). Ein Punkt auf der Objektfläche wird vom Brillenglas auf die Fernpunktkugel abgebildet, wie in Fig. 13A und 13B schematisch gezeigt. Bei dem in Fig. 13A und 13B gezeigten Beispiel ist die augenseitige Fläche des Brillenglases 10 die zu optimierende, progressive Fläche.

Gemäß einem ersten Beispiel wird die Objektabstandsfunktion $A_1(y)$ als Summe zweier Doppelasymptotenfunktionen dargestellt. Fig. 14A und 14B zeigen eine beispielhafte Start-Objektabstandsfunktion $A_{1G}(y)$ (gestrichelte Linie) und eine transformierte, an die neuen Objektabstände angepasste Objektabstandsfunktion $A_1(y)$ (durchgezogene Linie), welche mittels einer Überlagerung der Start-Objektabstandsfunktion $A_1(y)$ mit einer Korrekturfunktion $A_{1Korr}(y)$ (strichpunktierte Linie) erhalten ist.

Die Parameter der Start-Objektabstandsfunktion (welche durch eine Doppelasymptotenfunktion beschrieben wird) sind $a_G = 2,606$ dpt, $b_G = -2,588$ dpt, $c=-0,46$/mm, $d=2,2$ mm und $m = 0,75$.

In diesem Fall ist der Fernbezugspunkt *DF* (Designpunkt Ferne) bei $y$ = +8 mm ($y_{DF}$=8 mm) und der Nahbezugspunkt *DN* (Designpunkt Nähe) bei $y$ = -12 mm ($y_{DN}$ = -12 mm). Die Objektentfernung im Fernbezugspunkt ist unendlich und folglich $A_{1Ferne} = A_{1G}(y_{DF})$ = 0,00 dpt. Die Objektentfernung im Nahbezugspunkt ist - 40 cm und folglich $A_{1Nähe} = A_{1G}(y_{DN})$ = -2,50 dpt.

Die Objektentfernungen im Fern- und Nahbezugspunkte für einen bestimmten Brillenträger oder für andere Designs und Anwendungen können jedoch von dem obigen Standardmodell abweichen. Beispielsweise kann im Fernbezugspunkt *DF* eine Objektentfernung von -400 cm und im Nahbezugspunkt eine Objektentfernung von -50 cm berücksichtigt werden. Für diesen Fall sind die abgeänderten Sollvorgaben für die Objektentfernungen in den Fern- und Nahbezugspunkten $A_{1Ferne} = A_{1G}(y_{DF})$ = -0,25 dpt und $A_{1Nähe} = A_{1G}(y_{DN})$ = -2,00 dpt.

Durch eine Überlagerung der Start-Objektabstandsfunktion $A_{1G}(y)$ mit einer Korrekturfunktion $A_{1Korr}(y)$ mit den gleichen Koeffizienten *c, d* und *m*, wie die der Start-Objektabstandsfunktion und mit den Koeffizienten $b_{korr}$ = 0,526 und $a_{korr}$ = -0,782, ergibt sich der in Fig. 14B gezeigte angepasste Verlauf der Objektabstandsfunktion $A_1(y)$.

**Fig. 15A** zeigt eine weitere beispielhafte Start-Objektabstandsfunktion $A_{1G}(y)$. **Fig. 15B** zeigt die Steigung der Start-Objektabstandsfunktion (d.h. die Ableitung der Start-Objektabstandsfunktion nach $y$). Die Start-Objektabstandsfunktion wird durch eine Doppelasymptotenfunktion mit den Koeffizienten $a_G$=2,100; $b_G$ = 2,801; $c$ = 0,206; $d$ = 5,080; $m$ = 0,5 beschrieben. Die Start-Objektabstandsfunktion weist einen sehr weichen Übergang von dem Fern- zum Nahteil auf. In diesem Beispiel ist die reziproke Objektentfernung $A_{1GFerne}$ im Fernbezugspunkt *DF* (bei $y$ = 10 mm) gleich -1,00 dpt ($A_{1GFerne}$ = -1,00 dpt) und die reziproke Objektentfernung $A_{1GNähe}$ im Nahbezugspunkt *DN* (bei $y$ = -14 mm) gleich -2,5 dpt ($A_{1GNähe}$ = -2,5 dpt). Die Start-Objektabstandsfunktion beschreibt somit ein Schlauchdesign für ein Nahsichtglas.

**Fig. 15C** zeigt eine beispielhafte Gauss'sche Funktion $A_{1Gauss}(y)$ (d.h. den korrigierenden reziproken Objektabstand entlang der Hauptblicklinie), welche z.B. zur Abänderung der Designcharakteristik eingesetzt werden kann. Die in Fig. 15C gezeigte Gauss'sche Funktion wird durch eine Gauss'schen Glockenkurve

$$g(y) = g_a + g_b e^{-\frac{y-y_0}{\sigma}}$$

mit den Koeffizienten $g_a$ = 0,00; $g_b$ =0,35; $\sigma$ = 5,56 und $y_0$ = -3,47 beschrieben. **Fig. 15D** zeigt die Steigung (erste Ableitung nach $y$) der in Fig. 15C gezeigten Gauss'schen Glockenkurve.

**Fig. 15E** zeigt eine Objektabstandsfunktion $A_1(y)$ (d.h. den abgeänderten reziproken Objektabstand entlang der Hauptblicklinie), welche durch eine Überlagerung der in Fig. 15A gezeigten Start-Objektabstandsfunktion mit der in Fig. 15C gezeigten Gauss'schen Funktion erhalten wird. **Fig. 15F** zeigt die Steigung (die erste Ableitung nach $y$) der in Fig. 15E gezeigten Objektabstandsfunktion $A_1(y)$. Durch die Überlagerung der Start-Objektabstandsfunktion mit der in Fig. 15C gezeigten Gauss'schen Glockenkurve wird eine abgeänderte Objektabstandsfunktion erhalten, welche insbesondere für ein Bildschirmarbeitsplatz-Brillenglasdesign geeignet ist. Die Steigung der abgeänderten Objektabstandsfunktion $A_1(y)$ weist ein Maximum bei $y$ = -7 mm auf, d.h. dort ist die Änderung der Objektabstandsfunktion $A_1(y)$ am größten. Dementsprechend befindet sich in der Höhe von $y$ = -7 mm die engste Stelle im Progressionsbereich bezüglich der Sehbereichsbreite, welche z.B. durch die 0,5 dpt Isoastigmatismuslinie definiert wird. In der Höhe von $y$ = 0 mm weist die Steigung der Objektabstandsfunktion $A_1(y)$ ein lokales Minimum auf. In dieser Höhe ist das Sehfeld relativ breit und kann für das Blicken in Bildschirmentfernung genutzt werden.

Die in Fig. 15E gezeigte Objektanstandsfunktion $A_1(y)$ kann ferner an eine geänderte Vorgabe für die Objektentfernungen im Fernbezugspunkt und im Nahbezugspunkt angepasst werden. Eine beispielhafte Anpassung der Objektabstandsfunktion kann durch eine lineare Anpassung erfolgen. **Fig. 15G** zeigt eine abgeänderte Objektabstandsfunktion $A_{1neu}(y)$, welche durch eine lineare Anpassung der in Fig. 15E gezeigten Objektanstandsfunktion $A_1(y)$ an die Vorgabe:

$A_1(y$=10) = -0,50 dpt und

$A_1(y$ = -14) = -2,50 dpt

erhalten wurde.

Die abgeänderte bzw. angepasste Objektabstandsfunktion wird nach der Formel $A_{1neu}(y)=c+(1+m)A_1(y)$ erhalten, wobei c = 0,836 und $m$ = 0,335 gilt.

**Fig. 15H** zeigt die Steigung (Ableitung nach $y$) der in Fig. 15G gezeigten, abgeänderten Objektabstandsfunktion $A_{1neu}(y)$.

**Fig. 16A** zeigt einen Abschnitt einer graphischen Benutzerschnittstelle, wobei der Abschnitt ausgelegt ist, die Start-Objektabstandsfunktion (in dem konkreten Fall eine Start-Objektabstandsfunktion $A_{1G}(y)$ in Form einer Doppela-symptotenfunktion der Form $A_{1G}(y) = b + \dfrac{a}{(1+e^{c(y+d)m}}$ ) zu visualisieren. Die graphische Benutzerschnittstelle kann ferner einen Abschnitt (nicht in Fig. 16A gezeigt) umfassen, welcher Felder zur Eingabe und gegebenenfalls Veränderung der Koeffizienten der Start-Objektabstandsfunktion aufweist.

**Fig. 16B** zeigt eine graphische Benutzerschnittstelle, welche ausgelegt ist, eine Korrekturfunktion (in dem Fall eine Gauss'schen Glockenkurve der Form $A_{1Gauss} = a_0 + b_0 e^{-\left(\frac{y-y_0}{\sigma}\right)^2}$) zu visualisieren. Ferner umfasst die graphische Benutzerschnittstelle einen weiteren Abschnitt mit Eingabefelder/Masken, in welchen die Koeffizienten der Korrekturfunktion jeweils angegeben und gegebenenfalls verändert werden. Durch die Überlagerung mit einer Korrekturfunktion in Form einer Gauss'schen Glockenkurve kann der Zwischenbereich neu gewichtet werden. **Fig. 16C** zeigt eine graphische Benutzerschnittstelle mit einem Abschnitt, welcher ausgelegt ist, die durch Überlagerung der Start-Objektabstandsfunktion mit der Korrekturfunktion zusammengesetzte Objektabstandsfunktion zu visualisieren.

**Fig. 17A und 17B** zeigen jeweils den Verlauf und die Ableitung einer beispielhaften Start-Objektabstandsfunktion (Grundfunktion):

Fig. 17A zeigt den Verlauf der Funktion $A_{1G}(y)$ entlang der Hauptlinie in dpt;

Fig. 17B zeigt die erste Ableitung $\dfrac{dA_{1G}(y)}{dy}$ entlang der Hauptlinie.

In diesem Beispiel sind die Benutzerangaben zu den gewünschten Objektabständen $A_{1Ferne}$ = -0,5 dpt auf der Höhe $y_F$ = 12 mm und $A_{1Nähe}$ = -2,75 dpt auf der Höhe $y_N$ = -14 mm. Die Istwerte der Start-Objektabstandsfunktion $A_{1G}(y)$ in den Bezugspunkten ergeben sich zu $A_{1G}(y_F)$ = - 0,8896 dpt und $A_{1G}(y_N)$ = -2,4721 dpt.

Die in Fig. 17A gezeigte Start-Objektabstandsfunktion wird linear transformiert, wobei sich die Geradenkoeffizienten in Abhängigkeit der geänderten Vorgaben für die Objektabstände im Fern- und Nahbezugspunkt dann zu $c$ = 0,7648 und $m$ = 0,4212 berechnen.

**Fig. 17C und 17D** zeigen den Verlauf und die Ableitung der neuen, transformierten Objektabstandsfunktion $A_1$ ($A_1$-Funktion), wobei:

Fig. 17C den Verlauf der neuen Objektabstandsfunktion $A_1(y)$ entlang der Hauptlinie auf der Vorderfläche des Brillenglases; und

Fig. 17D die Ableitung $\dfrac{dA_1(y)}{dy}$ der neuen Objektabstandsfunktion $A_1(y)$

entlang der Hauptlinie auf der Vorderfläche des Brillenglases zeigen.

**Fig. 18 und 19** zeigen jeweils eine beispielhafte Maske bzw. eine beispielhafte graphische Benutzerschnittstelle zur Angabe und gegebenenfalls Änderung der Parameter der Objektabstandsfunktion und zur Visualisierung der so berechneten Objektabstandsfunktion.

**Bezugszeichenliste**

| | |
|---|---|
| 10 | Brillenglas |
| 12 | Auge des Brillenträgers |
| 14 | Objektfläche |
| e | Hornhautscheitelabstand (HSA) |
| b' | Augendrehpunktabstand |
| sZ' | Abstand Hornhautscheitel - Augendrehpunkt |
| s'BG | Bildentfernung |
| Z' | Augendrehpunkt |
| R | Fernpunktkugel |
| SK | Scheitelpunktkugel |

**Patentansprüche**

1. Computerimplementiertes Verfahren zum Optimieren eines progressiven Brillenglases umfassend die Schritte:

   Vorgeben einer Start-Objektabstandsfunktion $A_{1G}(y)$,
   Erfassen von Objektentfernungsdaten, wobei die Objektentfernungsdaten eine Objektentfernung in zumindest einem vorgegebenen Punkt auf der Hauptblicklinie umfassen;
   Abändern der Start-Objektabstandsfunktion in Abhängigkeit von den erfassten Objektentfernungsdaten;
   Optimieren des progressiven Brillenglases, wobei bei der Optimierung des Brillenglases die abgeänderte Objektabstandsfunktion berücksichtigt wird, wobei
   das Abändern der Start-Objektabstandsfunktion $A_{1G}(y)$ ein Überlagern $A_1(y) = A_{1G}(y) + A_{1Korr}(y)$ der Start-Objektabstandsfunktion $A_{1G}(y)$ mit einer Korrekturfunktion $A_{1Korr}(y)$ umfasst, wobei die Korrekturfunktion zumindest einen variablen Parameter aufweist, welcher derart in Abhängigkeit von den erfassten Objektentfernungsdaten bestimmt wird, dass der Wert der abgeänderten Start-Objektabstandsfunktion in zumindest einem vorgegebenen Punkt gleich dem reziproken Wert der erfassten Sollobjektentfernung für diesen Punkt ist, und wobei
   die Objektabstandsfunktion als der reziproke Objektabstand entlang der Hauptblicklinie definiert wird und $y$ die vertikale Koordinate ist,
   wobei die Korrekturfunktion eine Doppelasymptotenfunktion

   $$A_{1Korr}(y) = b_{korr} + \frac{a_{korr}}{(1 + e^{c_{korr}(y + d_{korr})})^{m_{korr}}}$$

   mit den Parametern $a_{korr}, b_{korr}, c_{korr}, d_{korr}, m_{korr}$ ist, wobei die Parameter $b_{korr}$ und $a_{korr}$ der Korrekturfunktion in Abhängigkeit der erfassten Objektentfernungsdaten bestimmt werden; oder
   wobei die Korrekturfunktion eine lineare Funktion der Start-Objektabstandsfunktion $A_{Korr}(y) = c + mA_{1G}(y)$ mit den Parametern $c$ und $m$ ist.

2. Verfahren nach Anspruch 1, wobei die Objektentfernungsdaten zumindest eine Sollobjektentfernung $A_{1Ferne}$ in einem vorgegeben Fernbezugspunkt auf der Hauptblicklinie und eine Sollobjektentfernung $A_{1Nähe}$ in einem vorgegebenen Nahbezugspunkt auf der Hauptblicklinie umfassen.

3. Verfahren nach Anspruch 1 oder 2, wobei die Start-Objektabstandsfunktion eine Doppelasymptotenfunktion

   $$A_{1G}(y) = b_G + \frac{a_G}{(1 + e^{c(y + d)})^m}$$

   mit den Parametern $a_G, b_G, c, d, m$ ist.

4. Verfahren nach Anspruch 3, wobei die Korrekturfunktion eine Doppelasymptotenfunktion ist und wobei für die Parameter der Korrekturfunktion gilt $c = C_{korr}, d = d_{korr}, m = m_{korr}$

5. Verfahren nach Anspruch 2, wobei die Korrekturfunktion eine lineare Funktion der Start-Objektabstandsfunktion ist, wobei für die Parametern $c$ und $m$ gilt:

   $$c = \frac{\Delta A_{1F} A_{1G}(y_{DN}) - \Delta A_{1N} A_{1G}(y_{DF})}{A_{1G}(y_{DN}) - A_{1G}(y_{DF})}$$

   $$m = \frac{\Delta A_{1N} - \Delta A_{1F}}{A_{1G}(y_{DN}) - A_{1G}(y_{DF})},$$

   wobei

$$\Delta A_{1F} = A_{1Ferne} - A_{1G}(y_{DF});$$

$$\Delta A_{1N} = A_{1N\ddot{a}he} - A_{1G}(y_{DN});$$

$A_{1Ferne}$ den reziproken Wert der Sollobjektentfernung im Fernbezugspunkt;
$A_{1N\ddot{a}he}$ den reziproken Wert der Sollobjektentfernung im Nahbezugspunkt;
$y_F$ die vertikale Koordinate des Fernbezugspunkts; und
$y_N$ die vertikale Koordinate des Nahbezugspunkts

bezeichnen.

6. Verfahren nach einem der vorangegangenen Ansprüche, ferner umfassend ein Überlagern der Start-Objektabstandsfunktion $A_{1G}(y)$ mit einer Funktion, welche eine Gauss'schen Glockenkurve

$$A_{1Gauss}(y) = g_a + g_b e^{-\frac{y-y_0}{\sigma}}$$ mit den Parametern $g_a, g_b, y_0, \sigma$ ist.

7. Computerprogrammerzeugnis, welches ausgelegt ist, wenn geladen und ausgeführt auf einem Computer, ein Verfahren zum Optimieren eines progressiven Brillenglases nach einem der Ansprüche 1 bis 8 durchzuführen.

8. Speichermedium mit darauf gespeichertem Computerprogramm, wobei das Computerprogramm ausgelegt ist, wenn geladen und ausgeführt auf einem Computer, ein Verfahren zum Optimieren eines progressiven Brillenglases nach einem der Ansprüche 1 bis 6 durchzuführen.

9. Vorrichtung zum Optimieren eines progressiven Brillenglases umfassend Optimierungsmittel, welche ausgelegt sind, ein Optimieren des Brillenglases nach dem Verfahren gemäß einem der Ansprüche 1 bis 6 durchzuführen.

10. Verfahren zum Herstellen eines progressiven Brillenglases umfassend:

- Optimieren des Brillenglases nach dem Verfahren gemäß einem der Ansprüche 1 bis 6,
- Bereitstellen von Flächendaten des berechneten bzw. optimierten Brillenglases und
- Fertigen des Brillenglases gemäß der bereitgestellten Flächendaten des Brillenglases.

11. Vorrichtung zum Herstellen eines progressiven Brillenglases, umfassend:

- Optimierungsmittel, welche ausgelegt sind, ein Optimieren des Brillenglases nach dem Verfahren gemäß einem der Ansprüche 1 bis 6 durchzuführen; und
- Bearbeitungsmittel zum fertig Bearbeiten des Brillenglases.

**Claims**

1. Computer-implemented method for optimising a progressive spectacle lens, comprising the steps of:

specifying an initial object distance function $A_{1G}(y)$,
acquiring object distance data, wherein the object distance data comprise an object distance at at least one specified point in the main line of sight;
modifying the initial object distance function on the basis of the acquired object distance data;
optimising the progressive spectacle lens, wherein the modified object distance function is taken into account when optimising the spectacle lens, wherein
the modification of the initial object distance function $A_{1G}(y)$ comprises superposition $A_1(y) = A_{1G}(y) + A_{1Korr}(y)$
of the initial object distance function $A_{1G}(y)$ on a correction function $A_{1Korr}(y)$, wherein the correction function comprises at least one variable parameter that is determined on the basis of the acquired object distance data such that the value of the modified initial object distance function is equal, at at least one specified point, to the reciprocal value of the acquired target object distance for this point, and wherein

the object distance function is defined as the reciprocal object distance along the main line of sight and $y$ is the vertical coordinate,

wherein the correction function is a doubly asymptotic function

$$A_{1Korr}(y) = b_{korr} + \frac{a_{korr}}{\left(1 + e^{c_{korr}(y+d_{korr})}\right)^{m_{korr}}}$$

having the parameters $a_{korr}$, $b_{korr}$, $c_{korr}$, $d_{korr}$, $m_{korr}$, wherein the parameters $b_{korr}$ and $a_{korr}$ of the correction function are determined on the basis of the acquired object distance data; or

wherein the correction function is a linear function of the initial object distance function $A_{Korr}(y) = c + mA_{1G}(y)$ having the parameters $c$ and m.

2. Method according to claim 1, wherein the object distance data comprise at least one target object distance $A_{1Feme}$ at a specified far reference point in the main line of sight and a target object distance $A_{1Nähe}$ at a specified near reference point in the main line of sight.

3. Method according to either claim 1 or claim 2, wherein the initial object distance function is a doubly asymptotic function

$$A_{1G}(y) = b_G + \frac{a_G}{\left(1 + e^{c(y+d)}\right)^m}$$

having the parameters $a_G$, $b_G$, $c$, $d$, m.

4. Method according to claim 3, wherein the correction function is a doubly asymptotic function, and wherein $c = c_{korr}$, $d = d_{korr}$, $m = m_{korr}$ is true for the parameters of the correction function.

5. Method according to claim 2, wherein the correction function is a linear function of the initial object distance function, wherein the following is true for the parameters $c$ and $m$:

$$c = \frac{\Delta A_{1F} A_{1G}(y_{DN}) - \Delta A_{1N} A_{1G}(y_{DF})}{A_{1G}(y_{DN}) - A_{1G}(y_{DF})}$$

$$m = \frac{\Delta A_{1N} - \Delta A_{1F}}{A_{1G}(y_{DN}) - A_{1G}(y_{DF})},$$

wherein

$$\Delta A_{1F} = A_{1Ferne} - A_{1G}(y_{DF});$$

$$\Delta A_{1N} = A_{1N\ddot{a}he} - A_{1G}(y_{DN});$$

$A_{1Ferne}$ denotes the reciprocal value of the target object distance in the far reference point;
$A_{1N\ddot{a}he}$ denotes the reciprocal value of the target object distance in the near reference point;
$y_F$ denotes the vertical coordinate of the far reference point; and
$y_N$ denotes the vertical coordinate of the near reference point.

6. Method according to any of the preceding claims, further comprising superposing the initial object distance function $A_{1G}(y)$ on a function that is a Gaussian bell curve

$$A_{1Gauss}(y) = g_a + g_b e^{-\frac{y-y_0}{\sigma}}$$

having the parameters $g_a$, $g_b$, $y_0$, $\sigma$.

7. Computer program product that is designed, when loaded and executed on a computer, to carry out a method for optimising a progressive spectacle lens according to any of claims 1 to 8.

8. Storage medium comprising a computer program stored thereon, wherein the computer program is designed, when loaded and executed on a computer, to carry out a method for optimising a progressive spectacle lens according to any of claims 1 to 6.

9. Apparatus for optimising a progressive spectacle lens, comprising optimisation means that are designed to optimise the spectacle lens according to the method according to any of claims 1 to 6.

10. Method for producing a progressive spectacle lens, comprising:

   - optimising the spectacle lens according to the method according to any of claims 1 to 6,
   - providing surface data of the computed and/or optimised spectacle lens, and
   - manufacturing the spectacle lens according to the spectacle lens surface data provided.

11. Apparatus for producing a progressive spectacle lens, comprising:

   - optimisation means that are designed to optimise the spectacle lens according to the method according to any of claims 1 to 6; and
   - machining means for final machining of the spectacle lens.

## Revendications

1. Procédé mis en oeuvre par ordinateur pour l'optimisation d'un verre de lunettes progressif, comprenant les étapes consistant à :

   prédéfinir une fonction de distance à l'objet initiale $A_{1G}(y)$,
   saisir les données d'éloignement de l'objet, les données d'éloignement de l'objet comprenant un éloignement de l'objet en au moins un point prédéfini sur la ligne principale du regard ;
   modifier la fonction de distance à l'objet initiale en fonction des données d'éloignement de l'objet saisies ;
   optimiser le verre de lunettes progressif, la fonction de distance à l'objet modifiée étant prise en compte lors de l'optimisation du verre de lunettes,
   la modification de la fonction de distance à l'objet initiale $A_{1G}(y)$ comprenant une superposition $A_1(y) = A_{1G}(y) + A_{1Karr}(y)$ de la fonction de distance à l'objet initiale $A_{1G}(y)$ par une fonction de correction $A_{1Korr}(y)$, la fonction de correction comprenant au moins un paramètre variable, lequel est déterminé en fonction des données d'éloignement de l'objet saisies de telle manière que la valeur de la fonction de distance à l'objet initiale modifiée en au moins un point prédéfini est identique à la valeur réciproque de l'éloignement de l'objet théorique saisi pour ce point, et

la fonction de distance à l'objet étant définie comme la distance à l'objet réciproque le long de la ligne principale du regard et y étant la coordonnée verticale,

la fonction de correction étant une fonction à deux asymptotes

$$A_{1Korr}(y) = b_{korr} + \frac{a_{korr}}{(1 + e^{c_{korr}(y+d_{korr})})^{m_{korr}}}$$

avec les paramètres $a_{korr}$, $b_{korr}$, $c_{korr}$, $d_{korr}$, $m_{korr}$, les paramètres $b_{korr}$ et $a_{korr}$ de la fonction de correction étant déterminés en fonction des données d'éloignement de l'objet saisies ; ou

la fonction de correction étant une fonction linéaire de la fonction de distance à l'objet initiale $A_{korr}(y) = c + m_{A1G}(y)$ avec les paramètres $c$ et $m$.

2. Procédé selon la revendication 1, les données d'éloignement de l'objet comprenant au moins un éloignement de l'objet théorique $A_{1Ferne}$ en un point de référence distant prédéfini sur la ligne principale du regard et un éloignement de l'objet théorique $A_{1Nähe}$ en un point de référence proche prédéfini sur la ligne principale du regard.

3. Procédé selon la revendication 1 ou 2, la fonction de distance à l'objet initiale étant une fonction à deux asymptotes

$$A_{1G}(y) = b_G + \frac{a_G}{(1 + e^{c(y+d)})^m}$$

avec les paramètres $a_G$, $b_G$, $c$, $d$, $m$.

4. Procédé selon la revendication 3, la fonction de correction étant une fonction à deux asymptotes et $c=c_{korr}$, $d=d_{korr}$, $m=m_{korr}$ s'appliquant pour les paramètres de la fonction de correction.

5. Procédé selon la revendication 2, la fonction de correction étant une fonction linéaire de la fonction de distance à l'objet initiale, $c$ et $m$ s'appliquant pour les paramètres :

$$c = \frac{\Delta A_{1F} A_{1G}(y_{DN}) - \Delta A_{1N} A_{1G}(y_{DF})}{A_{1G}(y_{DN}) - A_{1G}(y_{DF})}$$

$$m = \frac{\Delta A_{1N} - \Delta A_{1F}}{A_{1G}(y_{DN}) - A_{1G}(y_{DF})},$$

sachant que

$$\Delta A_{1F} = A_{1Ferne} - A_{1G}(y_{DF});$$

$$\Delta A_{1N} = A_{1Nähe} - A_{1G}(y_{DN});$$

$A1_{Ferne}$ indiquant la valeur réciproque de l'éloignement de l'objet théorique au point de référence distant ;
$A1_{Nähe}$ indiquant la valeur réciproque de l'éloignement de l'objet théorique au point de référence proche ;
$y_F$ indiquant les coordonnées verticales du point de référence distant ; et
$y_N$ indiquant les coordonnées verticales du point de référence proche.

**6.** Procédé selon l'une quelconque des revendications précédentes, comprenant en outre une superposition de la fonction de distance à l'objet initiale $A_{1G}(y)$ avec une fonction, laquelle est une courbe en cloche de Gauss

$$A_{1Gauss}(y) = g_a + g_b e^{-\frac{y - y_0}{\sigma}}$$

$g_a, g_b, y_0, \sigma$ avec les paramètres

**7.** Produit-programme informatique, lequel est conçu, lorsqu'il est chargé et exécuté sur un ordinateur, pour mettre en oeuvre un procédé d'optimisation d'un verre de lunettes progressif selon l'une quelconque des revendications 1 à 8.

**8.** Support de mémoire sur lequel est mis en mémoire le programme informatique, le programme informatique étant conçu, lorsqu'il est chargé et exécuté sur un ordinateur, pour mettre en oeuvre un procédé d'optimisation d'un verre de lunettes progressif selon l'une quelconque des revendications 1 à 6.

**9.** Dispositif d'optimisation d'un verre de lunettes progressif comprenant des moyens d'optimisation, lesquels sont conçus pour mettre en oeuvre une optimisation du verre de lunettes d'après le procédé selon l'une quelconque des revendications 1 à 6.

**10.** Procédé de fabrication d'un verre de lunettes progressif consistant à :

- optimiser le verre de lunettes d'après le procédé selon l'une quelconque des revendications 1 à 6,
- fournir des données de surface du verre de lunettes calculé ou optimisé et
- finir le verre de lunettes conformément aux données de surface fournies du verre de lunettes.

**11.** Dispositif de fabrication d'un verre de lunettes progressif, comprenant :

- des moyens d'optimisation, lesquels sont conçus pour mettre en oeuvre une optimisation du verre de lunettes d'après le procédé selon l'une quelconque des revendications 1 à 6 ; et
- des moyens de traitement pour le traitement final du verre de lunettes.

## Soll-Astigmatismus

Fig. 1

## Soll-Astigmatismus

Fig. 2

Fig. 3

## Soll-Astigmatismus

Fig. 4

Fig. 5

Fig. 6A

Fig. 6B

Mittl. Flächenbrechwert

Fig. 7A

## Mittl. Flächenbrechwert

-9.27 -9.25 -9.00 -8.75 -8.50 -8.25

Fig. 7B

## Gradient Flächenbrechwert

| 0.02 | 0.04 | 0.06 | 0.08 | 0.10 | 0.12 | 0.14 | 0.16 |
| 0.18 | 0.20 | 0.22 | 0.24 | 0.26 | 0.28 | 0.30 | 0.32 |
| 0.34 | 0.36 | 0.38 | 0.40 | 0.42 | 0.44 | 0.46 | 0.48 |
| 0.50 | 0.52 | | | | | | |

Fig. 8A

## Gradient Flächenbrechwert

Fig. 8B

Flächenastigmatismus

Fig. 9A

## Flächenastigmatismus

Fig. 9B

## Gradient Flächenastigmatismus

| | | | | | | | |
|---|---|---|---|---|---|---|---|
| 0.02 | 0.04 | 0.06 | 0.08 | 0.10 | 0.12 | 0.14 | 0.16 |
| 0.18 | 0.20 | 0.22 | 0.24 | 0.26 | 0.28 | 0.30 | 0.32 |
| 0.34 | 0.36 | 0.38 | 0.40 | 0.42 | 0.44 | 0.46 | 0.48 |
| 0.50 | 0.52 | 0.54 | 0.54 | 0.56 | 0.58 | 0.60 | 0.62 |
| 0.66 | 0.68 | | | | | | |

Fig.10A

## Gradient Flächenastigmatismus

Fig. 10B

Astigmatismus  (Kom. Glas+Auge)

Fig. 11A

Astigmatismus (Kom. Glas+Auge)

Fig. 11B

Brechwert (S'-S)

Fig. 12A

# Brechwert (S'-S)

-5.25 -5.00 -4.75 -4.50 -4.25 -4.00 -3.75 -3.50 -3.25
-3.00 -2.75 -2.50 -2.25 -2.00 -1.75 -1.50 -1.25 -1.00
-0.75 -0.50 -0.25

Fig. 12B

Fig. 13A

Fig. 13B

Reziproker Objektabstand als Doppelasymptotenfunktion

Fig. 14A

Reziproker Objektabstand als Doppelasymptotenfunktion
A1(y)=A1G(y)+A1Korr(y)

Fig. 14B

Reziproker Objektabstand als Doppelasymptotenfunktion

— —A1DAS(y)

## Fig. 15A

Reziproker Objektabstand als Doppelasymptotenfunktion
Steigung (Ableitung nach y)

— —d(A1DAS)/dy

## Fig. 15B

Reziproker Objektabstand: Gauss'sche Glockenkurve

− −A1Gauss(y)

## Fig. 15C

Reziproker Objektabstand als Gauss'sche Glockenkurve
Steigung (Ableitung nach y)

− −d(A1Gauss)/dy

## Fig. 15D

Reziproker Objektabstand: Doppelasymptotenfunktion + Gauss

—A1(y)

## Fig. 15E

Reziproker Objektabstand: Doppelasymptotenfunktion + Gauss
Steigung (Ableitung nach y)

—d(A1)/dy

## Fig. 15F

Reziproker Objektabstand: Doppelasymptotenfunktion + Gauss
mit linearer Anpassung an A1Ferne und A1Naehe

## Fig. 15G

Reziproker Objektabstand: Doppelasymptotenfunktion + Gauss
mit linearer Anpassung an A1Ferne und A1Naehe
Steigung (Ableitung nach y)

## Fig. 15H

Fig. 16A

Fig. 16B

Fig. 16C

Fig. 17A

Fig. 17B

A1(y) auf der Vorderflaeche

Fig. 17C

dA1(y)/dy auf der Vorderflaeche

Fig. 17D

**Eingabe einer Geraden**

Parameterwahl

Anpassung für freie Objektentfernung dA1

Gerade durch 2 Punkte

$$A(y) = a0 + a1^*y$$

a0 = 0.7648     a1 = 0.4218

|  | 1. Punkt | 2. Punkt |
|---|---|---|
| Abszisse | -0.88960 | -2.4721 |
| Ordinate | 0.38960 | -0.2779 |

OK

x=     y=     f(x)=

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008015189
- DE 102009005206
- DE 102009005214
- WO 2008089996 A
- EP 1277079 A2
- WO 2010084019 A
- DE 102009005847
- DE 102004059448 A1